(19) Europäisches Patentamt
European Patent Office
Office européen des brevets

(11) **EP 4 040 524 B1**

(12) **EUROPEAN PATENT SPECIFICATION**

(45) Date of publication and mention
of the grant of the patent:
**03.09.2025 Bulletin 2025/36**

(21) Application number: **20870990.7**

(22) Date of filing: **29.09.2020**

(51) International Patent Classification (IPC):
*H01M 4/13* (2010.01)    *H01M 4/36* (2006.01)
*H01M 4/131* (2010.01)    *H01M 4/62* (2006.01)
*H01M 4/28* (2006.01)    *H01M 4/02* (2006.01)

(52) Cooperative Patent Classification (CPC):
**H01M 4/366; H01M 4/13; H01M 4/131; H01M 4/62;**
H01M 2004/028; Y02E 60/10; Y02P 70/50

(86) International application number:
**PCT/JP2020/036875**

(87) International publication number:
**WO 2021/065900 (08.04.2021 Gazette 2021/14)**

(54) **SECONDARY BATTERY**

SEKUNDÄRBATTERIE

BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2019 JP 2019180789**

(43) Date of publication of application:
**10.08.2022 Bulletin 2022/32**

(73) Proprietor: **Murata Manufacturing Co., Ltd.
Nagaokakyo-shi, Kyoto 617-8555 (JP)**

(72) Inventors:
• **WATANABE, Rie
Nagaokakyo-shi, Kyoto 617-8555 (JP)**
• **OKUNO, Moriaki
Nagaokakyo-shi, Kyoto 617-8555 (JP)**
• **HORIKOSHI, Yoshiichi
Nagaokakyo-shi, Kyoto 617-8555 (JP)**
• **KATSUMOTO, Taichi
Nagaokakyo-shi, Kyoto 617-8555 (JP)**
• **HAYAZAKI, Shinji
Nagaokakyo-shi, Kyoto 617-8555 (JP)**

(74) Representative: **Witte, Weller & Partner
Patentanwälte mbB
Postfach 10 54 62
70047 Stuttgart (DE)**

(56) References cited:
JP-A- 2004 055 537    JP-A- 2016 105 360
JP-A- 2017 098 178    JP-A- 2019 079 708

**Description**

Technical Field

The technology relates to a secondary battery.

Background Art

Various kinds of electronic equipment such as mobile phones have been widely used. Such widespread use has promoted development of a secondary battery as a power source that is smaller in size and lighter in weight and allows for a higher energy density. A configuration of the secondary battery influences a battery characteristic. Accordingly, the configuration of the secondary battery has been considered in various ways.

Specifically, in order to achieve, for example, a favorable battery characteristic, a positive electrode and a negative electrode are alternately stacked with a polymer electrolyte layer or a separator interposed therebetween, and the positive electrode and the negative electrode have lengths equal to each other. For example, see PTLs 1 to 3. Further, in order to achieve, for example, stable manufacturability, a positive electrode is cut by means of a laser (so-called laser cutting). For example, see PTLs 4 and 5.

PTL 6 according to its abstract states a lithium ion secondary battery is provided with a positive electrode plate 110 comprising a positive electrode active material part 112 and a positive electrode collector 111 to carry that, a negative electrode plate 120 comprising a negative electrode active material part 122 and a negative electrode collector 121 to carry that, a separator 130 provided between the positive electrode plate 110 and the negative electrode plate 120, electrolyte, and a battery container to contain the positive electrode plate 110, the negative electrode plate 120, the separator 130, and the electrolyte. The positive electrode plate 110 and the negative electrode plate 120 are wound through the separator 130 between them to compose an electrode plate group. In the electrode plate group, both lengthwise end parts 111a and 111b of the positive electrode collector are positioned on the outer side of both lengthwise end parts 122a and 122b of the negative electrode active material part.

PTL 7 according to its abstract states a battery 1 (i.e. a power storage device) comprises: a power-generating element 2 having a positive electrode 3, a negative electrode 4 and separators 5 and 6 disposed between the positive electrode 3 and the negative electrode 4. The positive electrode 3 and the negative electrode 4 include, at ends, a positive electrode active material layer-unformed part 33 and a negative electrode active material layer-unformed part 43 respectively. As in sectional view of the power-generating element 2, the positive electrode active material layer-unformed part 33 and the negative electrode active material layer-unformed part 43 are each glued with the corresponding separator 5(6) at least one point; a gap between the positive electrode 3 and the negative electrode 4 adjoins a space outside the power-generating element 2.

PTL 8 according to its abstract states a secondary battery includes positive electrode plates 11 and negative electrode plates 14 that are alternately laminated through a separator 17. The positive electrode plate includes: a positive electrode plate current collector foil 12 having a positive electrode lead part 12c; and a positive electrode active material 13 provided on a side surface part of the positive electrode current collector foil in a side inner than both end pars of a width direction of the separator. The negative electrode plate 14 includes: a negative electrode current collector foil 15 having a negative electrode lead part 15a; and a negative electrode active material 16 provided on a side surface part of the negative electrode current collector foil in a range of the side inner than both end parts of the width direction of the separator and the side outer than both end parts of the width direction of the positive electrode active material. The secondary battery comprises: a positive electrode side insulator 18 provided on the side surface part of the positive electrode current collector foil to which the positive electrode active material is not provided on the positive electrode lead part side; and a negative electrode side insulator 19 provided on the side surface part of the negative electrode current collector foil to which the negative electrode active material is not provided on the negative electrode lead part side.

PTL 9 according to its abstract states a positive electrode for a non-aqueous electrolyte secondary battery includes a positive electrode current collector, a protective layer provided on the surface of the positive electrode current collector, and a positive electrode mixture layer including a positive electrode active material provided on the surface of the protective layer. The protective layer includes an insulating filler, a binder, and a conductive material. The protective layer includes a central portion and an end portion in a plan view as viewed from the stacking direction of the positive electrode current collector, the protective layer, and the positive electrode mixture layer. The proportion of the conductive material at the end of the protective layer is less than the proportion of the conductive material at the central portion of the protective layer. The ratio Sc/S of an area Sc of the end of the protective layer to an area S of the entire protective layer in plan view is 0.12 or more.

Citation List

## EP 4 040 524 B1

Patent Literature

PTL 1: Japanese Unexamined Patent Application Publication No. H11-307084
PTL 2: Japanese Unexamined Patent Application Publication (Published Japanese Translation of PCT Application) No. JP2007-510259
PTL 3: Japanese Unexamined Patent Application Publication No. H06-223860
PTL 4: Japanese Unexamined Patent Application Publication No. 2018-037308
PTL 5: Japanese Unexamined Patent Application Publication No. 2016-219327
PTL 6: Japanese Unexamined Patent Application Publication No. 2004-055537
PTL 7: Japanese Unexamined Patent Application Publication No. 2016-105360
PTL 8: Japanese Unexamined Patent Application Publication No. 2017-098178
PTL 9: Japanese Unexamined Patent Application Publication No. 2019-079708

Summary of the Invention

Consideration has been given in various ways to solve problems of a secondary battery; however, sufficient measures have not yet been taken to achieve both suppression of a short circuit and an increase in battery capacity, and there is still room for improvement in terms thereof.

The technology has been made in view of such an issue and it is an object of the technology to provide a secondary battery that makes it possible to achieve both suppression of a short circuit and an increase in battery capacity.

A secondary battery according to an embodiment of the technology includes a negative electrode, a positive electrode, and an electrolytic solution. The negative electrode includes a negative electrode active material layer. The positive electrode includes a positive electrode active material layer. The positive electrode active material layer has a same dimension as a dimension of the negative electrode active material layer in a width direction. The positive electrode active material layer includes a reaction active part in which charging and discharging reactions proceed, and a reaction less-active part in which the charging and discharging reactions proceed less easily than in the reaction active part. The reaction less-active part includes one end part, another end part, or both of the positive electrode active material layer in the width direction.

According to the secondary battery of the embodiment of the technology, the positive electrode active material layer has the same dimension as the dimension of the negative electrode active material layer in the width direction. The positive electrode active material layer includes the reaction active part and the reaction less-active part. The reaction less-active part is the one end part, the other end part, or both of the positive electrode active material layer in the width direction. This makes it possible to achieve both suppression of a short circuit and an increase in battery capacity.

Note that effects of the technology are not necessarily limited to those described above and may include any of a series of effects described below in relation to the technology.

Brief Description of Drawings

[FIG. 1] FIG. 1 is a sectional view of a configuration of a secondary battery according to a first embodiment of the technology.
[FIG. 2] FIG. 2 is an enlarged sectional view of a configuration of a battery device illustrated in FIG. 1.
[FIG. 3] FIG. 3 is a sectional view of a configuration of a secondary battery of a first comparative example.
[FIG. 4] FIG. 4 is a sectional view of a configuration of a secondary battery of a second comparative example.
[FIG. 5] FIG. 5 is a sectional view of a configuration of a secondary battery according to a second embodiment of the technology.
[FIG. 6] FIG. 6 is a sectional view of a configuration of a secondary battery according to a third embodiment of the technology.
[FIG. 7] FIG. 7 is a sectional view of a configuration of a secondary battery of Modification 1.
[FIG. 8] FIG. 8 is a sectional view of another configuration of the secondary battery of Modification 1.
[FIG. 9] FIG. 9 is a sectional view of a configuration of a secondary battery of Modification 2.
[FIG. 10] FIG. 10 is a sectional view of another configuration of the secondary battery of Modification 2.
[FIG. 11] FIG. 11 is a sectional view of a configuration of a secondary battery of Modification 3.
[FIG. 12] FIG. 12 is a sectional view of another configuration of the secondary battery of Modification 3.
[FIG. 13] FIG. 13 is a sectional view of a configuration of a secondary battery of Modification 4.

Modes for Carrying Out the Invention

Some embodiments of the technology are described below in detail with reference to the drawings. The description is given in the following order.

1. Secondary Battery (First Embodiment)

    1-1. Overall Configuration
    1-2. Detailed Configuration of Battery Device
    1-3. Operation
    1-4. Manufacturing Method
    1-5. Action and Effects

2. Secondary Battery (Second Embodiment)
3. Secondary Battery (Third Embodiment)
4. Modifications

<1. Secondary Battery (First Embodiment)>

A description is given first of a secondary battery according to a first embodiment of the technology.

Described here is a secondary battery having a flat and columnar shape. Examples of the secondary battery include a so-called coin-type secondary battery and a so-called button-type secondary battery. As will be described later, the flat and columnar secondary battery includes a pair of bottom parts and a sidewall part. The bottom parts are opposed to each other. The sidewall part lies between the bottom parts. This secondary battery has a height that is small relative to an outer diameter. Note that a description will be given later of specific dimensions (the outer diameter and the height) of the flat and columnar secondary battery.

A charge and discharge principle of the secondary battery is not particularly limited. The secondary battery described below obtains a battery capacity by utilizing insertion and extraction of an electrode reactant. The secondary battery includes a positive electrode, a negative electrode, and an electrolytic solution. In the secondary battery, in order to prevent precipitation of the electrode reactant on a surface of the negative electrode in the middle of charging, a charge capacity of the negative electrode is greater than a discharge capacity of the positive electrode. In other words, an electrochemical capacity per unit area of the negative electrode is set to be greater than an electrochemical capacity per unit area of the positive electrode.

Although not limited to a particular kind, the electrode reactant is a light metal, such as an alkali metal or an alkaline earth metal. Examples of the alkali metal include lithium, sodium, and potassium. Examples of the alkaline earth metal include beryllium, magnesium, and calcium.

In the following, a description is given of an example case where the electrode reactant is lithium. A secondary battery that obtains a battery capacity by utilizing insertion and extraction of lithium is a so-called lithium-ion secondary battery. In the lithium-ion secondary battery, lithium is inserted and extracted in an ionic state.

<1-1. Overall Configuration>

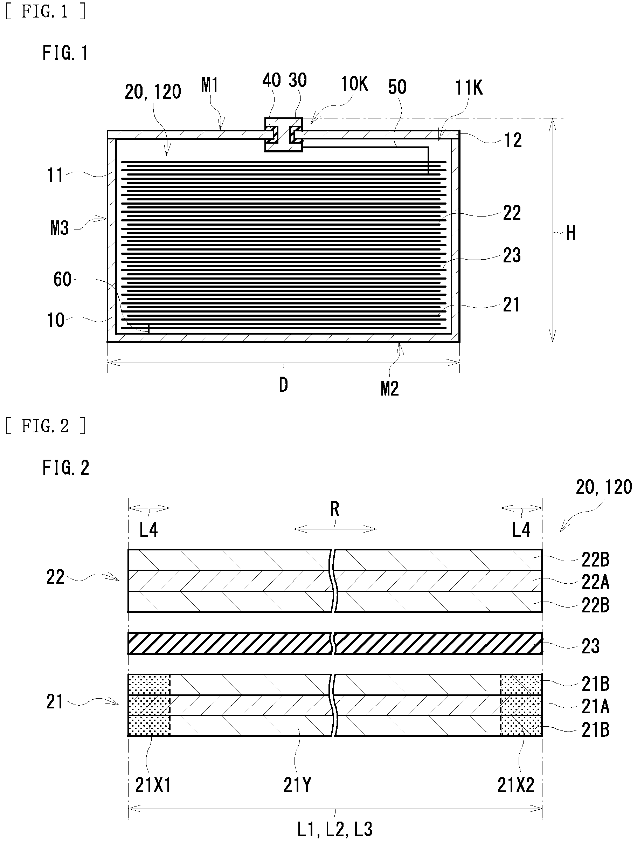

FIG. 1 is a sectional view of a configuration of the secondary battery according to the first embodiment. For simplifying the illustration, a positive electrode 21, a negative electrode 22, a separator 23, a positive electrode lead 50, and a negative electrode lead 60, which will be described later, are each illustrated in a linear shape in FIG. 1.

For convenience, the following description is given with an up direction in FIG. 1 as an upper side of the secondary battery, and a down direction in FIG. 1 as a lower side of the secondary battery.

The secondary battery is a button-type secondary battery, and therefore, as illustrated in FIG. 1, has a flat and columnar three-dimensional shape with a height H thereof small relative to an outer diameter D thereof. Here, the secondary battery has a flat and cylindrical (circular columnar) three-dimensional shape. Dimensions of the secondary battery are not particularly limited; however, the outer diameter (here, the diameter of the circular shape) D is from 3 mm to 30 mm both inclusive, and the height H is from 0.5 mm to 70 mm both inclusive. Note that a ratio of the outer diameter D to the height H, i.e., D/H, is greater than 1 and smaller than or equal to 25.

Specifically, as illustrated in FIG. 1, the secondary battery includes a battery can 10, a battery device 20, an electrode terminal 30, a gasket 40, the positive electrode lead 50, and the negative electrode lead 60.

[Battery Can]

The battery can 10 contains the battery device 20. The battery can 10 has a three-dimensional shape corresponding to the three-dimensional shape of the secondary battery described above.

Here, the battery can 10 has a hollow, flat and cylindrical three-dimensional shape extending in a height direction (a direction corresponding to the height H) in accordance with the three-dimensional shape of the secondary battery described above. The battery can 10 thus includes a pair of bottom parts M1 and M2, and a sidewall part M3. The sidewall part M3 is coupled to the bottom part M1 at one end, and is coupled to the bottom part M2 at another end. Because the battery can 10 is flat and cylindrical as described above, the bottom parts M1 and M2 are each circular in plan shape, and a surface of the sidewall part M3 is a convex curved surface.

The battery can 10 includes a containing part 11 and a cover part 12. The containing part 11 is a flat and cylindrical (handleless mug-shaped) member with one end open and another end closed. The containing part 11 contains the battery device 20. More specifically, the containing part 11 has an opening 11K at one end to allow the battery device 20 to be contained in the containing part 11. The cover part 12 is a generally plate-shaped member, and is joined to the containing part 11 to cover the opening 11K.

Here, as will be described later, the cover part 12 is joined to the containing part 11 by a method such as a welding method. The battery can 10 after the cover part 12 has been joined to the containing part 11 is a single member as a whole, that is, not separable into two or more members.

As a result, the battery can 10 is a single member including no folded-over portion in the middle or no portion in which two or more members are placed over each other. What is meant by "including no folded-over portion in the middle" is that the battery can 10 is not so processed as to include a portion folded over another portion in the middle. What is meant by "including no portion in which two or more members are placed over each other" is that the battery can 10 is physically a single member and is therefore not a composite body in which two or more members including a container and a cover are so fitted to each other as to be separable later.

Thus, the battery can 10 described here is a so-called crimpless can. A reason for employing the crimpless can is that this increases a device space volume inside the battery can 10, and accordingly, increases also an energy density per unit volume of the secondary battery. The "device space volume" refers to a volume of an internal space of the battery can 10 available for containing the battery device 20 therein.

Further, the battery can 10 is electrically conductive. The battery can 10 thus serves as a negative electrode terminal because the battery can 10 is coupled to the negative electrode 22, which will be described later, of the battery device 20. A reason for employing such a configuration is that allowing the battery can 10 to serve as the negative electrode terminal makes it unnecessary to provide a negative electrode terminal separate from the battery can 10 in the secondary battery. A decrease in device space volume resulting from the presence of a negative electrode terminal is thereby avoided. This results in an increase in device space volume, and accordingly an increase in energy density per unit volume of the secondary battery.

Further, the battery can 10 has a through hole 10K. The through hole 10K is used to attach the electrode terminal 30 to the battery can 10. Here, the through hole 10K is provided at the bottom part M1.

The battery can 10 includes one or more of electrically conductive materials including, without limitation, metals (including stainless steel) and alloys. Here, in order to serve as the negative electrode terminal, the battery can 10 includes one or more of materials including, without limitation, iron, copper, nickel, stainless steel, an iron alloy, a copper alloy, and a nickel alloy. The kinds of the stainless steel employable include SUS304 and SUS316, but are not particularly limited thereto.

Note that, as will be described later, the battery can 10 is insulated via the gasket 40 from the electrode terminal 30 serving as a positive electrode terminal. This is for the purpose of preventing the occurrence of a contact (a short circuit) between the battery can 10 and the electrode terminal 30.

[Battery Device]

The battery device 20 is a device causing charging and discharging reactions to proceed, and includes, the positive electrode 21, the negative electrode 22, the separator 23, and an electrolytic solution which is a liquid electrolyte. Note that FIG. 1 omits the illustration of the electrolytic solution.

The battery device 20 has a three-dimensional shape corresponding to the three-dimensional shape of the battery can 10. The "three-dimensional shape corresponding to the three-dimensional shape of the battery can 10" refers to a three-dimensional shape similar to that of the battery can 10. A reason for allowing the battery device 20 to have such a three-dimensional shape is that this makes it more difficult for a dead space (a gap between the battery can 10 and the battery device 20) to result excessively upon placing the battery device 20 in the battery can 10 than in a case where the battery device 20 has a three-dimensional shape different from that of the battery can 10. This allows for efficient use of the internal space of the battery can 10, resulting in an increase in device space volume, and accordingly an increase in energy density per unit volume of the secondary battery. Here, the battery can 10 has a flat and cylindrical three-dimensional shape as described above, and therefore the battery device 20 also has a flat and cylindrical three-dimensional shape.

Here, the positive electrode 21 and the negative electrode 22 are stacked with the separator 23 interposed therebetween. More specifically, the positive electrode 21 and the negative electrode 22 are alternately stacked in the height direction with the separator 23 interposed therebetween. Thus, the battery device 20 is a stacked electrode body including the positive electrode 21 and the negative electrode 22 that are stacked with the separator 23 interposed therebetween. The number of each of the positive electrodes 21 and the negative electrodes 22 to be stacked is not particularly limited, and may be freely chosen.

FIG. 1 also illustrates a stacked body 120 to be used to fabricate the battery device 20 in a process of manufacturing the secondary battery to be described later. The stacked body 120 has a configuration similar to that of the battery device 20 which is a stacked electrode body, except that the positive electrode 21, the negative electrode 22, and the separator 23 are each yet to be impregnated with the electrolytic solution.

Note that a detailed configuration of the battery device 20 (the positive electrode 21, the negative electrode 22, the separator 23, and the electrolytic solution) will be described later (see FIG. 2).

[Electrode Terminal]

The electrode terminal 30 is an external coupling terminal to be coupled to electronic equipment on which the secondary battery is mountable. The electrode terminal 30 is provided at the bottom part M1 (the cover part 12) of the battery can 10.

The electrode terminal 30 is placed through the through hole 10K provided in the battery can 10. The electrode terminal 30 is thus attached to the battery can 10 by means of the through hole 10K. One end of the electrode terminal 30 is exposed outside the battery can 10, and another end of the electrode terminal 30 is exposed inside the battery can 10.

Further, the electrode terminal 30 is coupled to the positive electrode 21 (a positive electrode current collector) of the battery device 20. The electrode terminal 30 thus serves as the positive electrode terminal. The electrode terminal 30 includes a material similar to a material included in the positive electrode current collector to be described later.

Note that the three-dimensional shape of the electrode terminal 30 is not particularly limited. Here, the electrode terminal 30 extends in the height direction and has a generally cylindrical three-dimensional shape with an outer diameter reduced partly in the middle. More specifically, the electrode terminal 30 has a three-dimensional shape including a large-outer-diameter cylindrical part, a small-outer-diameter cylindrical part, and a large-outer-diameter cylindrical part coupled in this order in the height direction. The outer diameter of each of the two large-outer-diameter cylindrical parts is larger than an inner diameter of the through hole 10K, and the outer diameter of the small-outer-diameter cylindrical part is smaller than the inner diameter of the through hole 10K. A reason for this is that this helps to prevent the large-outer-diameter cylindrical part from passing through the through hole 10K. A further reason is that the electrode terminal 30 is fixed to the battery can 10 by utilizing a pressing force of the large-outer-diameter cylindrical part on the battery can 10. This helps to prevent the electrode terminal 30 from falling out of the battery can 10.

[Gasket]

The gasket 40 is disposed between the battery can 10 and the electrode terminal 30. The gasket 40 insulates the electrode terminal 30 from the battery can 10. The electrode terminal 30 is thus fixed to the battery can 10 with the gasket 40 interposed therebetween.

The gasket 40 includes one or more of insulating materials including, without limitation, polypropylene and polyethylene. A mounting range of the gasket 40 is not particularly limited. Here, the gasket 40 is disposed in a gap between the battery can 10 and the electrode terminal 30.

[Positive Electrode Lead and Negative Electrode Lead]

The positive electrode lead 50 couples the electrode terminal 30 and the positive electrode 21 (coupled to a positive electrode current collector 21A) to be described later to each other. The positive electrode lead 50 includes a material similar to the material included in the positive electrode current collector 21A. The number of the positive electrode leads 50 is not particularly limited, and may be freely chosen.

The negative electrode lead 60 couples the battery can 10 and the negative electrode 22 (a negative electrode current collector 22A to be described later) to each other. The negative electrode lead 60 includes a material similar to the material included in the battery can 10. The number of the negative electrode leads 60 is not particularly limited, and may be freely chosen.

[Others]

Note that the secondary battery may further include one or more of other unillustrated components.

Specifically, the secondary battery includes a safety valve mechanism. The safety valve mechanism cuts off the electrical coupling between the battery can 10 and the battery device 20 if an internal pressure of the battery can 10 reaches a certain level or higher due to, e.g., an internal short circuit or heating from outside. Although a mounting position of the safety valve mechanism is not particularly limited, the safety valve mechanism is provided at one of the bottom parts M1 and M2, preferably the bottom part M2 at which the electrode terminal 30 is not provided.

Further, the secondary battery includes an insulator between the battery can 10 and the battery device 20. The insulator includes one or more of materials including, without limitation, an insulating film and an insulating sheet, and prevents a short circuit between the battery can 10 and the battery device 20 (the positive electrode 21). A mounting range of the insulator is not particularly limited, and may be freely chosen.

Note that the battery can 10 is provided with, for example, a liquid injection hole and a cleavage valve. The liquid injection hole is used for injecting the electrolytic solution into the battery can 10, and is sealed after use. In a case where the internal pressure of the battery can 10 reaches a certain level or higher due to, e.g., an internal short circuit or heating from outside as described above, the cleavage valve cleaves to release the internal pressure. Although there is no limitation on the respective positions at which the liquid injection hole and the cleavage valve are to be provided, the liquid injection hole and the cleavage valve are each provided at one of the bottom parts M1 and M2, preferably the bottom part M2 at which the electrode terminal 30 is not provided, as with the mounting position of the safety valve mechanism described above.

<1-2. Detailed Configuration of Battery Device>

FIG. 2 illustrates an enlarged sectional configuration of the battery device 20 illustrated in FIG. 1. Note that FIG. 2 illustrates only one set of the positive electrode 21 and the negative electrode 22 opposed to each other with the separator 23 interposed therebetween, and illustrates a state where the positive electrode 21, the negative electrode 22, and the separator 23 are separated from each other.

The positive electrode 21 and the negative electrode 22 are stacked on each other with the separator 23 interposed therebetween, thus being opposed to each other with the separator 23 interposed therebetween, as illustrated in FIG. 2.

[Positive Electrode]

The positive electrode 21 allows lithium to be easily inserted into and extracted from only a portion of the whole thereof, which enables the charging and discharging reactions to proceed easily only in the portion. The positive electrode 21 extends in a width direction R, and has a dimension (a width L1) in the width direction R. The width L1 is a distance from one end to another end of the positive electrode 21 in the width direction R. As illustrated in FIG. 2, the width direction R described above is a direction along the sheet of FIG. 2, more specifically, a horizontal direction in FIG. 2.

Specifically, the positive electrode 21 includes the positive electrode current collector 21A, and a positive electrode active material layer 21B provided on each of both sides of the positive electrode current collector 21A. Note that the positive electrode active material layer 21B may be provided only on one side of the positive electrode current collector 21A.

The positive electrode current collector 21A includes one or more of electrically conductive materials including, without limitation, aluminum, an aluminum alloy, and stainless steel.

The positive electrode active material layer 21B includes a positive electrode active material into which lithium is insertable and from which lithium is extractable. The positive electrode active material includes one or more of lithium-containing compounds including, without limitation, a lithium-containing transition metal compound. Examples of the lithium-containing transition metal compound include an oxide, a phosphoric acid compound, a silicic acid compound, a boric acid compound, etc. each including lithium and one or more transition metal elements as constituent elements. Specific examples of the oxide include $LiNiO_2$, $LiCoO_2$, and $LiMn_2O_4$. Specific examples of the phosphoric acid compound include $LiFePO_4$ and $LiMnPO_4$. Note that the positive electrode active material layer may further include, without limitation, a positive electrode binder and a positive electrode conductor. The positive electrode binder includes a polymer compound, and the positive electrode conductor includes an electrically conductive material, such as a carbon material, a metal material, or a polymer compound.

[Negative Electrode]

The negative electrode 22 allows lithium to be easily inserted into and extracted from the whole thereof, which enables the charging and discharging reactions to proceed easily in the whole. The negative electrode 22 extends in the width direction R, and has a dimension (a width L2) in the width direction R. The width L2 is a distance from one end to another end of the negative electrode 22 in the width direction R.

Specifically, the negative electrode 22 includes the negative electrode current collector 22A, and a negative electrode active material layer 22B provided on each of both sides of the negative electrode current collector 22A. Note that the negative electrode active material layer 22B may be provided only on one side of the negative electrode current collector 22A.

The negative electrode current collector 22A includes one or more of electrically conductive materials including, without limitation, iron, copper, nickel, stainless steel, an iron alloy, a copper alloy, and a nickel alloy.

The negative electrode active material layer 22B includes a negative electrode active material into which lithium is insertable and from which lithium is extractable. The negative electrode active material includes one or more of materials including, without limitation, a carbon material and a metal-based material. Examples of the carbon material include graphite. The metal-based material is a material that includes, as a constituent element or constituent elements, one or more elements among metal elements and metalloid elements that are each able to form an alloy with lithium. Specifically, the metal-based material includes one or more of elements including, without limitation, silicon and tin, as a constituent element or constituent elements. The metal-based material may be a simple substance, an alloy, a compound, or a mixture of two or more thereof. Note that the negative electrode active material layer may further include, without limitation, a negative electrode binder and a negative electrode conductor. Details of the negative electrode binder are similar to those of the positive electrode binder. Details of the negative electrode conductor are similar to those of the positive electrode conductor.

[Separator]

The separator 23 is an insulating porous film interposed between the positive electrode 21 and the negative electrode 22. The separator 23 allows lithium to pass therethrough while preventing a short circuit between the positive electrode 21 and the negative electrode 22. The separator 23 extends in the width direction R, and has a dimension (a width L3) in the width direction R. The width L3 is a distance from one end to another end of the separator 23 in the width direction R. Further, the separator 23 includes one or more of polymer compounds, including polyethylene.

[Electrolytic Solution]

The positive electrode 21, the negative electrode 22, and the separator 23 are each impregnated with the electrolytic solution. The electrolytic solution includes a solvent and an electrolyte salt. The solvent includes one or more of nonaqueous solvents (organic solvents) including, without limitation, a carbonic-acid-ester-based compound, a carboxylic-acid-ester-based compound, and a lactone-based compound. The electrolyte salt includes one or more of light metal salts, including a lithium salt.

[Detailed Configuration of Each of Positive Electrode, Negative Electrode, and Separator]

The positive electrode 21 has the same dimension as the dimension of the negative electrode 22 in the width direction R. More specifically, the width L1 of the positive electrode 21 is the same as the width L2 of the negative electrode 22. Note that the wording "the width L1 is the same as the width L2" refers to not only a case where the width L1 is completely the same as the width L2, but also a case where the width L1 is substantially the same as the width L2, taking dimensional deviation caused by a manufacturing error into account.

In the negative electrode 22, the negative electrode active material is present throughout the width direction R. Thus, the negative electrode active material layer 22B allows lithium to be easily inserted into and extracted from the whole thereof, which enables the charging and discharging reactions to proceed easily in the whole.

Specifically, in the negative electrode 22, the charging and discharging reactions proceed easily in each of one end part and another end part in the width direction R, and the charging and discharging reactions proceed easily also in a middle part between the one end part and the other end part. The "one end part" described here is a left end part in FIG. 2, and the "other end part" described here is a right end part in FIG. 2. The same applies to the following.

In contrast, in the positive electrode 21, the positive electrode active material is present throughout the width direction R. Lithium is easily inserted into and extracted from a portion of the positive electrode active material layer 21B, which enables the charging and discharging reactions to proceed easily therein, whereas it is difficult for lithium to be inserted into and extracted from the rest of the positive electrode active material layer 21B, which makes it difficult for the charging and discharging reactions to proceed therein. In the positive electrode 21, the charging and discharging reactions thus proceed easily only in a portion of the whole, as described above.

Specifically, in the positive electrode active material layer 21B of the positive electrode 21, it is difficult for the charging and discharging reactions to proceed in each of one end part (a reaction less-active part 21X1) and another end part (a reaction less-active part 21X2) in the width direction R, and the charging and discharging reactions proceed easily in a middle part (a reaction active part 21Y) between the one end part and the other end part. In other words, in the positive electrode active material layer 21B, the one end part and the other end part are the reaction less-active parts 21X1 and 21X2 respectively, and the middle part is the reaction active part 21Y.

The positive electrode 21 thus includes the reaction less-active part 21X1, the reaction active part 21Y, and the reaction less-active part 21X2 in this order in the width direction R. In other words, the positive electrode 21 includes the two reaction less-active parts 21X1 and 21X2 and the one reaction active part 21Y. In FIG. 2, each of the reaction less-active parts 21X1 and 21X2 is hatched, and the border between each of the reaction less-active parts 21X1 and 21X2 and the reaction active part 21Y is denoted by a dashed line.

The reaction active part 21Y includes the positive electrode current collector 21A and the positive electrode active material layer 21B, and the positive electrode active material layer 21B includes the positive electrode active material. In the reaction active part 21Y, lithium is easily inserted into and extracted from the positive electrode active material included in the positive electrode active material layer 21B also after completion of the secondary battery, because the reaction active part 21Y has not been subjected to a cutting process in the process of manufacturing the secondary battery (a process of fabricating the positive electrode 21) to be described later. In the reaction active part 21Y, the charging and discharging reactions thus proceed easily also after the completion of the secondary battery.

In contrast, the reaction less-active part 21X1 includes the positive electrode current collector 21A and the positive electrode active material layer 21B, and the positive electrode active material layer 21B includes the positive electrode active material. In the reaction less-active part 21X1, an ultra-thin high-resistance layer is provided on a surface of the positive electrode active material layer 21B on a side opposed to the negative electrode 22, because the reaction less-active part 21X1 has been subjected to the cutting process in the process of manufacturing the secondary battery (the process of fabricating the positive electrode 21). Although not particularly limited, the high-resistance layer has a thickness of about several tens of nanometers to several hundreds of nanometers. FIG. 2 omits the illustration of the high-resistance layer. The high-resistance layer substantially serves as an insulating layer with low ionic conductivity (low permeability to ions). Accordingly, the presence of the high-resistance layer makes it difficult for lithium to be inserted into and extracted from the positive electrode active material included in the reaction less-active part 21X1 after the completion of the secondary battery. In the reaction less-active part 21X1, it is thus difficult for the charging and discharging reactions to proceed after the completion of the secondary battery. More specifically, the charging and discharging reactions proceed less easily in the reaction less-active part 21X1 than in the reaction active part 21Y.

In particular, the high-resistance layer is preferably provided to extend onto a side surface of the reaction less-active part 21X1 (the positive electrode active material layer 21B). A reason for this is that this makes it more difficult for the charging and discharging reactions to proceed.

Here, the reaction less-active part 21X1 does not include a coating layer intended to reduce electrical conductivity. Specifically, a porous coating layer or a gel coating layer having ionic conductivity is not included in the reaction less-active part 21X1, even if the coating layer includes a material, such as aluminum oxide (alumina), having no electrically conductive property.

Note that the reaction less-active part 21X2 has a configuration similar to that of the reaction less-active part 21X2 described above. The reaction less-active part 21X2 also does not include the coating layer intended to reduce electrical conductivity, as with the case described in relation to the reaction less-active part 21X1 described above.

The width L1 of the positive electrode 21 is the same as the width L2 of the negative electrode 22 and the positive electrode 21 includes the reaction less-active parts 21X1 and 21X2 and the reaction active part 21Y for the following reasons. This helps to prevent occurrence of stacking deviation (positional deviation) between the positive electrode 21 and the negative electrode 22 in the course of manufacture and after manufacture (after completion) of the secondary battery, and also helps to prevent occurrence of a short circuit between the positive electrode 21 and the negative electrode 22. The reasons described here will be described in detail later.

Although not particularly limited, each of the reaction less-active parts 21X1 and 21X2 preferably has a dimension (a width L4) in the width direction R of from 50 $\mu$m to 150 $\mu$m both inclusive in particular. A reason for this is that this helps to sufficiently prevent occurrence of positional deviation, and to sufficiently prevent occurrence of a short circuit. In this case, it is difficult for even a minor short circuit to occur, while a battery capacity is secured.

In order to determine the width L4 by determining the border between each of the reaction less-active parts 21X1 and 21X2 and the reaction active part 21Y, the positive electrode 21 may be analyzed by an analysis method such as microscopic Raman spectroscopy.

A method of determining the width L4 by the microscopic Raman spectroscopy is as described below. Here, a description is given of a case where the positive electrode active material includes a lithium-containing transition metal compound (lithium cobalt oxide ($LiCoO_2$)) which is an oxide, and the width L4 of the reaction less-active part 21X1 is determined.

First, the positive electrode active material layer 21B (the reaction less-active part 21X1 and the reaction active part 21Y) is analyzed by means of a microscopic Raman spectrometer to thereby obtain a Raman spectrum. Examples of the microscopic Raman spectrometer employable include a laser Raman microscope RAMAN-11 manufactured by Nanophoton Corporation.

In the Raman spectrum, a peak derived from the A1g mode of the positive electrode active material ($LiCoO_2$) is detected in a Raman shift range of 590 $cm^{-1}$ to 600 $cm^{-1}$ or the vicinity thereof. This peak is an analysis parameter related to stretching vibration (stretching) of a Co-O bond, and has an A1g half-width indicating a degree of crystallinity of the positive electrode active material. Specifically, the A1g half-width being small indicates that the positive electrode active material has high crystallinity, and the use of the positive electrode active material thus enables the charging and discharging reactions to proceed easily. The A1g half-width being large indicates that the positive electrode active material has low crystallinity, and the use of the positive electrode active material thus makes it difficult for the charging and discharging reactions to proceed.

An analysis result to be used to determine the width L4 is obtained on the basis of the Raman spectrum described above. In the analysis result, a vertical axis represents an average value of the A1g half-width ($cm^{-1}$) and a horizontal axis represents a distance ($\mu$m). In this case, the distance represented by the horizontal axis is a distance from one end of the reaction less-active part 21X1 (one end of the reaction less-active part 21X1 on a side far from the reaction active part 21Y) in a direction from the reaction less-active part 21X1 toward the reaction active part 21Y. The average value of the A1g half-width represented by the vertical axis is the average value of five A1g half-widths obtained on the basis of five Raman spectra. The five Raman spectra are detected for each distance.

The positive electrode 21 is, as will be described later, formed by cutting (laser cutting) the positive electrode current collector 21A with the positive electrode active material layer 21B provided thereon by means of a laser apparatus. In this case, the vicinity (the one end part) of a cut portion of the positive electrode active material layer 21B is heated at high temperature. This causes the positive electrode active material to be modified (the crystallinity of the positive electrode active material to change) in the one end part. As a result, the reaction less-active part 21X1 is formed.

Thus, in the analysis result of the positive electrode 21 (the reaction less-active part 21X1 and the reaction active part 21Y) obtained by the microscopic Raman spectroscopy, the average value of the A1g half-width increases and then decreases as represented by an upward convex peak as the distance increases, and thereafter becomes substantially constant. In other words, in the positive electrode 21 (the positive electrode active material layer 21B) subjected to the laser cutting, in a short distance range (the reaction less-active part 21X1), the positive electrode active material has low crystallinity, which makes it difficult for the charging and discharging reactions to proceed. In a long distance range (the reaction active part 21Y), the positive electrode active material has high crystallinity, which enables the charging and discharging reactions to proceed easily.

Thereafter, a differential operation is performed on the average value of the A1g half-width with respect to the distance, on the basis of the analysis result described above, to thereby obtain a differential curve in which a vertical axis represents a derivative value and a horizontal axis represents the distance ($\mu$m). As described above, the average value of the A1g half-width increases and decreases as the distance increases, and thereafter becomes substantially constant. The derivative value thus increases and decreases and thereafter becomes substantially zero. The derivative value indicates a slope corresponding to a change in the average value of the A1g half-width.

Lastly, the position (distance) where the derivative value becomes substantially zero is determined to thereby determine the width L4. The position where the derivative value becomes substantially zero is the border position between the reaction less-active part 21X1 and the reaction active part 21Y. Accordingly, the distance corresponding to the border position is the width L4.

A procedure of determining the width L4 of the reaction less-active part 21X2 is similar to the procedure of determining the width L4 of the reaction less-active part 21X1, except that an analysis result whose horizontal axis represents a distance in a direction from the reaction less-active part 21X2 toward the reaction active part 21Y is obtained by analyzing the reaction less-active part 21X2 and the reaction active part 21Y in place of the reaction less-active part 21X1 and the reaction active part 21Y.

Note that, in a case of determining the width L4 on the basis of the analysis result of the positive electrode active material layer 21B obtained by the microscopic Raman spectroscopy described above, the width L4 may be determined on the basis of another analysis parameter, instead of determining the width L4 on the basis of the average value of the A1g half-width which is the analysis parameter related to the crystallinity of the positive electrode active material.

Specifically, in a case where the positive electrode active material includes $LiCoO_2$ which is an oxide, the width L4 may be determined by a similar procedure, except that an analysis result related to the intensity of a peak derived from $CoO_x$ is used in place of the A1g half-width. Further, in a case where the positive electrode active material layer 21B includes a carbon material as the positive electrode conductor, the width L4 may be determined by a similar procedure, except that an analysis result related to the intensity of a G band peak derived from the physical property of the carbon material is used in place of the A1g half-width.

Here, the width L3 of the separator 23 is the same as the width L2 of the negative electrode 22. Note that the wording "the width L3 is the width L1" refers to not only a case where the width L3 is completely the same as the width L2, but also a case where the width L3 is substantially the same as the width L2, as with the wording "the width L1 is the same as the width L2". A difference between the width L3 and the width L2 in the case where the width L3 is substantially the same as the width L2 is 0.01 mm or less.

<1-3. Operation>

The secondary battery operates in a manner described below. Upon charging, in the battery device 20, lithium is extracted from the positive electrode 21, and the extracted lithium is inserted into the negative electrode 22 via the electrolytic solution. Upon discharging, in the battery device 20, lithium is extracted from the negative electrode 22, and the extracted lithium is inserted into the positive electrode 21 via the electrolytic solution. In these cases, the lithium is inserted and extracted in an ionic state.

<1-4. Manufacturing Method>

In a case of manufacturing the secondary battery, the secondary battery is assembled by a procedure described below.

[Fabrication of Positive Electrode]

First, the positive electrode active material is mixed with materials including, without limitation, the positive electrode binder and the positive electrode conductor on an as-needed basis to thereby obtain a positive electrode mixture. Thereafter, the positive electrode mixture is put into a solvent such as an organic solvent to thereby prepare a paste positive electrode mixture slurry. Lastly, the positive electrode mixture slurry is applied on each of both sides of the positive electrode current collector 21A to thereby form the positive electrode active material layer 21B. Thereafter, the positive electrode active material layer 21B is compression-molded by means of a machine such as a roll pressing machine on an as-needed basis. In this case, the positive electrode active material layer 21B may be heated. The positive electrode active material layer 21B may be compression-molded a plurality of times.

Lastly, the cutting process is performed on the positive electrode active material layer 21B. Specifically, the positive electrode current collector 21A with the positive electrode active material layer 21B formed thereon is cut (laser cutting) by means of a laser apparatus. Although not limited to a particular kind, examples of the laser include a YAG laser (having a wavelength of 1064 nm). The use of laser cutting as a cutting method enables the positive electrode current collector 21A with the positive electrode active material layer 21B formed thereon to be cut easily with high accuracy.

In this case, the vicinity (the one end part and the other end part) of the cut portion of the positive electrode active material layer 21B is heated at high temperature. This causes a component of a material such as the positive electrode active material included in the positive electrode active material layer 21B to be vaporized and oxidized, for example, in each of the one end part and the other end part. As a result, the high-resistance layer is formed on the surface of the positive electrode active material layer 21B. For example, in a case where the positive electrode active material includes $LiCoO_2$ which is an oxide, the high-resistance layer is considered to include one or more of cobalt compounds including, without limitation, cobalt oxide and cobalt hydroxide. Thus, the reaction less-active part 21X1 is formed as the one end part with the high-resistance layer formed thereon, and the reaction less-active part 21X2 is similarly formed as the other end part with the high-resistance layer formed thereon. In other words, utilizing a high-temperature heating phenomenon involved in laser cutting makes it possible to intentionally reduce lithium insertability and extractability in a portion (the one end part and the other end part) of the positive electrode active material layer 21B. This enables each of the reaction less-active parts 21X1 and 21X2 to be formed.

Conditions including a heating temperature and a heating time in the cutting process are not particularly limited, as long as the temperature allows for formation of the high-resistance layer. The heating temperature is adjustable depending on a condition such as an output of the laser.

In a case of forming each of the reaction less-active parts 21X1 and 21X2, it is possible to adjust the width L4 by changing the conditions including the heating temperature and the heating time described above.

Note that, in the middle part between the one end part and the other end part of the positive electrode active material layer 21B, the high-resistance layer is not formed because the middle part is not heated at high temperature. The reaction active part 21Y is thus formed as the middle part.

The positive electrode active material layer 21B including the reaction less-active parts 21X1 and 21X2 and the reaction active part 21Y is formed on each of both sides of the positive electrode current collector 21A in this manner. As a result, the positive electrode 21 is fabricated.

[Fabrication of Negative Electrode]

The negative electrode 22 is fabricated by a procedure similar to the fabrication procedure of the positive electrode 21 described above, except that the cutting process is not performed. Specifically, the negative electrode active material is mixed with materials including, without limitation, the negative electrode binder and the negative electrode conductor on an as-needed basis to thereby obtain a negative electrode mixture. Thereafter, the negative electrode mixture is put into a solvent such as an organic solvent to thereby prepare a paste negative electrode mixture slurry. Thereafter, the negative electrode mixture slurry is applied on each of both sides of the negative electrode current collector 22A to thereby form the negative electrode active material layer 22B. Thereafter, the negative electrode active material layer 22B is compression-molded on an as-needed basis. Lastly, the negative electrode current collector 22A with the negative electrode active material layer 22B formed thereon is punched by means of a punching apparatus. The negative electrode active material layer 22B is thus formed on each of both sides of the negative electrode current collector 22A. As a result, the negative electrode 22 is fabricated.

[Preparation of Electrolytic Solution]

The electrolyte salt is added to the solvent. Thus, the electrolyte salt is dissolved or dispersed in the solvent. The electrolytic solution including the solvent and the electrolyte salt is thereby prepared.

[Assembly of Secondary Battery]

First, the positive electrode 21 and the negative electrode 22 are alternately stacked with the separator 23 interposed therebetween to thereby fabricate the stacked body 120.
Thereafter, the stacked body 120 is placed into the containing part 11 through the opening 11K. In this case, one end of the negative electrode lead 60 is coupled to the stacked body 120 (the negative electrode current collector 22A of the negative electrode 22) and another end of the negative electrode lead 60 is coupled to the containing part 11 by a method such as a welding method. Although not limited to a particular kind, the welding method is one or more of welding methods including, without limitation, a laser welding method and a resistance welding method. Details of the kind of the welding method described here apply also to the following.
Thereafter, the cover part 12 with the electrode terminal 30 attached to the through hole 10K with the gasket 40 interposed therebetween is used. The cover part 12 is placed on the containing part 11 to cover the opening 11K, following which the cover part 12 is joined to the containing part 11 by a method such as a welding method. In this case, one end of the positive electrode lead 50 is coupled to the stacked body 120 (the positive electrode current collector 21A of the positive electrode 21) and another end of the positive electrode lead 50 is coupled to the electrode terminal 30 by a method such as a welding method. The opening 11K is thereby sealed by the cover part 12. Thus, the stacked body 120 is enclosed inside the battery can 10.
Lastly, the electrolytic solution is injected into the battery can 10 through the unillustrated liquid injection hole, following which the liquid injection hole is sealed. This causes the stacked body 120 (the positive electrode 21, the negative electrode 22, and the separator 23) to be impregnated with the electrolytic solution, thereby fabricating the battery device 20. The battery device 20 is thus sealed into the battery can 10. As a result, the secondary battery is completed.

<1-5. Action and Effects>

According to this secondary battery, the positive electrode 21 has the width L1 that is the same as the width L2 of the negative electrode 22, and the positive electrode 21 includes the reaction less-active parts 21X1 and 21X2 and the reaction active part 21Y. As a result, for a reason described below, it is possible to obtain a superior battery characteristic.

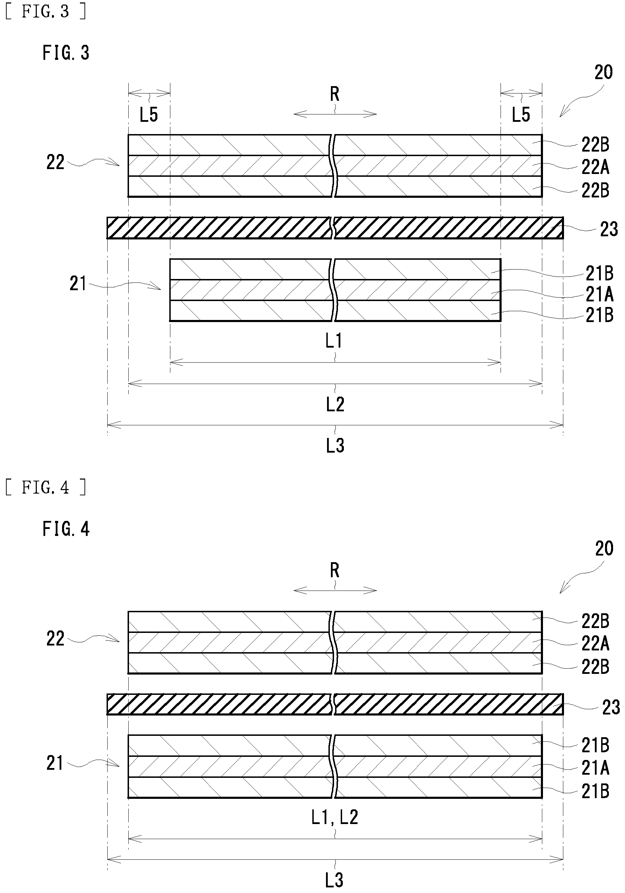

FIG. 3 illustrates a sectional configuration of a secondary battery (the battery device 20) of a first comparative example, and corresponds to FIG. 2. FIG. 4 illustrates a sectional configuration of a secondary battery (the battery device 20) of a second comparative example, and corresponds to FIG. 2.
The secondary battery of the first comparative example has a configuration similar to that of the secondary battery according to the present embodiment, except that the positive electrode 21 does not include the reaction less-active parts 21X1 and 21X2 and the reaction active part 21Y, that the width L1 of the positive electrode 21 is smaller than the width L2 of the negative electrode 22, and that the width L3 of the separator 23 is larger than the width L2 of the negative electrode 22, as illustrated in FIG. 3. In this case, one end part of the positive electrode 21 is recessed back by a width L5 from one end part of the negative electrode 22 toward an inner side, and another end part of the positive electrode 21 is recessed back by the width L5 from another end part of the negative electrode 22 toward the inner side. A reason for making the width L3 of the separator 23 larger than the width L2 of the negative electrode 22 is that this prevents a short circuit between the positive electrode 21 and the negative electrode 22 caused by precipitation of lithium upon charging and discharging.

The secondary battery of the second comparative example has a configuration similar to that of the secondary battery according to the present embodiment, except that the positive electrode 21 does not include the reaction less-active parts 21X1 and 21X2 and the reaction active part 21Y, and that the width L3 of the separator 23 is larger than the width L2 of the negative electrode 22, as illustrated in FIG. 4.

In the secondary battery of the first comparative example, as illustrated in FIG. 3, each of the one end part and the other end part of the negative electrode 22 is not opposed to the positive electrode 21, because the width L1 of the positive electrode 21 is smaller than the width L2 of the negative electrode 22. Note that the separator 23 is interposed between the positive electrode 21 and the negative electrode 22.

However, if positional deviation of each of the positive electrode 21, the negative electrode 22, and the separator 23 occurs in the course of manufacture and after manufacture (after completion) of the secondary battery, it becomes easier for lithium to be extracted from each of the one end part and the other end part of the negative electrode 22 toward the positive electrode 21 upon charging and discharging. Lithium is thus precipitated in each of the one end part and the other end part of the negative electrode 22, which makes it easier for a short circuit between the positive electrode 21 and the negative electrode 22 due to precipitation of lithium to occur.

This tendency to make it easier for a short circuit to occur becomes significant, in particular, in a case where the separator 23 interposed between the positive electrode 21 and the negative electrode 22 undergoes great positional deviation. A reason for this is that if the positional deviation results in absence of the separator 23 between the positive electrode 21 and the negative electrode 22, it becomes easier for lithium to be precipitated in each of the one end part and the other end part of the negative electrode 22.

Moreover, in the secondary battery of the first comparative example, the width L5 results in a decrease in an area over which the positive electrode 21 and the negative electrode 22 are opposed to each other, which tends to cause a battery capacity to decrease. In this case, making the width L5 smaller results in an increase in the area over which the positive electrode 21 and the negative electrode 22 correspond to each other, which causes the battery capacity to increase. However, if the width L5 becomes smaller, the one end part of the positive electrode 21 and the one end part of the negative electrode 22 become closer to each other, and the other end part of the positive electrode 21 and the other end part of the negative electrode 22 become closer to each other. This makes it easier for a short circuit caused by the positional deviation described above to occur.

In view of these, in the secondary battery of the first comparative example, suppression of a short circuit and an increase in battery capacity have a trade-off relationship with each other. The trade-off relationship is a relationship in which improvement of one characteristic out of two characteristics causes degradation of the other characteristic. It is thus difficult to achieve both suppression of a short circuit and an increase in battery capacity.

In the secondary battery of the second comparative example, the width L1 of the positive electrode 21 is equal to the width L2 of the negative electrode 22, as illustrated in FIG. 4. The whole of the negative electrode 22 is therefore opposed to the positive electrode 21. In this case, the area over which the positive electrode 21 and the negative electrode 22 are opposed to each other increases, which causes the battery capacity to increase.

However, if positional deviation occurs to result in no interposition of the separator 23 between the positive electrode 21 and the negative electrode 22, it becomes easier for a short circuit between the positive electrode 21 and the negative electrode 22 to occur, as described above. In this case, in particular, the one end part of the positive electrode 21 and the one end part of the negative electrode 22 are opposed to each other and the other end part of the positive electrode 21 and the other end part of the negative electrode 22 are opposed to each other even before occurrence of the positional deviation, because the width L1 is the same as the width L2. Thus, if the positional deviation results in no interposition of the separator 23 between the positive electrode 21 and the negative electrode 22, it becomes significantly easier for a short circuit between the positive electrode 21 and the negative electrode 22 to occur.

In view of these, the secondary battery of the second comparative example makes it possible to increase the battery capacity, but it is more difficult to suppress occurrence of a short circuit caused by positional deviation.

In contrast, in the secondary battery according to the present embodiment, although the width L1 of the positive electrode 21 is the same as the width L2 of the negative electrode 22, the positive electrode 21 includes the reaction less-active parts 21X1 and 21X2 and the reaction active part 21Y, as illustrated in FIG. 2.

In this case, in the positive electrode active material layer 21B, the charging and discharging reactions proceed easily in the middle part (the reaction active part 21Y), whereas it is difficult for the charging and discharging reactions to proceed in each of the one end part (the reaction less-active part 21X1) and the other end part (the reaction less-active part 21X2). Thus, even if each of the one end part and the other end part of the positive electrode 21 is opposed to the negative electrode 22, it is difficult for lithium to be extracted from the negative electrode 22 toward the positive electrode 21 (the reaction less-active parts 21X1 and 21X2). This helps to prevent occurrence of a short circuit between the positive electrode 21 and the negative electrode 22 due to precipitation of lithium, although the width L1 is the same as the width L2.

Further, even if positional deviation occurs to result in no interposition of the separator 23 between the positive electrode 21 and the negative electrode 22, it is difficult for lithium to be inserted into and extracted from each of the one end part (the reaction less-active part 21X1) and the other end part (the reaction less-active part 21X2) of the positive electrode 21, which makes it difficult for lithium to be extracted from the negative electrode 22 toward the positive electrode 21 (the reaction less-active parts 21X1 and 21X2). This helps to prevent occurrence of a short circuit between the positive electrode 21 and the negative electrode 22 due to precipitation of lithium, although the width L1 is the same as the width L2.

Moreover, as described above, even slight presence of each of the reaction less-active parts 21X1 and 21X2 makes it difficult for lithium to be extracted from the negative electrode 22 toward each of the one end part (the reaction less-active part 21X1) and the other end part (the reaction less-active part 21X2) of the positive electrode 21. Accordingly, the width L4 may be small. Thus, the area over which the positive electrode 21 and the negative electrode 22 are opposed to each other is almost maximum within a range in which a short circuit between the positive electrode 21 and the negative electrode 22 due to precipitation of lithium is preventable. This results in a great increase in battery capacity.

In view of these, the secondary battery according to the present embodiment breaks through the trade-off relationship described in relation to the secondary battery of the first comparative example, which makes it possible to achieve both suppression of a short circuit and an increase in battery capacity.

In this case, in particular, each of the reaction less-active parts 21X1 and 21X2 and the reaction active part 21Y is formed easily and stably by only performing the simple cutting process utilizing a high-temperature heating phenomenon involved in laser cutting on the positive electrode active material layer 21B, after forming the positive electrode active material layer 21B including the positive electrode active material. It is thus possible to easily and stably achieve both suppression of a short circuit and an increase in battery capacity.

In addition, in the secondary battery according to the present embodiment, the width L4 may be from 50 $\mu$m to 150 $\mu$m both inclusive. This not only helps to sufficiently prevent occurrence of positional deviation and to sufficiently prevent occurrence of a short circuit, but also helps to prevent occurrence of even a minor short circuit while securing a battery capacity. Accordingly, it is possible to achieve higher effects.

Further, as described above, utilizing the reaction less-active parts 21X1 and 21X2 makes it difficult for a short circuit between the positive electrode 21 and the negative electrode 22 to occur in the first place. The width L3 of the separator 23 thus does not have to be larger than the width L2 of the negative electrode 22, and the width L3 of the separator 23 may be the same as the width L2 of the negative electrode 22. In this case, the width of the whole battery device 20 is determined on the basis of the width L2 of the negative electrode 22, unlike in a case where the width of the whole battery device 20 is determined on the basis of the width L3 of the separator 23 because the width L3 of the separator 23 is larger than the width L2 of the negative electrode 22. Thus, the separator 23 may have the width L3 that is the same as the width L2 of the negative electrode 22. This results in a further increase in the area over which the positive electrode 21 and the negative electrode 22 are opposed to each other. Accordingly, it is possible to achieve higher effects.

Further, in the battery device 20, the positive electrode 21 and the negative electrode 22 may be stacked with the separator 23 interposed therebetween (the stacked electrode body). This makes it more difficult for a dead space to occur in the battery device 20 than in a case where the positive electrode 21 and the negative electrode 22 are wound with the separator 23 interposed therebetween (a wound electrode body). The dead space that occurs in the wound electrode body is a space such as one formed at a winding core part. Thus, the energy density per unit volume further increases to make it possible to achieve higher effects.

Further, the secondary battery may be a button-type secondary battery having a flat and columnar shape. This makes it possible to achieve higher effects because the energy density per unit volume effectively increases in the small-sized secondary battery which is highly constrained in terms of size.

<2. Secondary Battery (Second Embodiment)>

Next, a description will be given of a secondary battery according to a second embodiment of the technology.

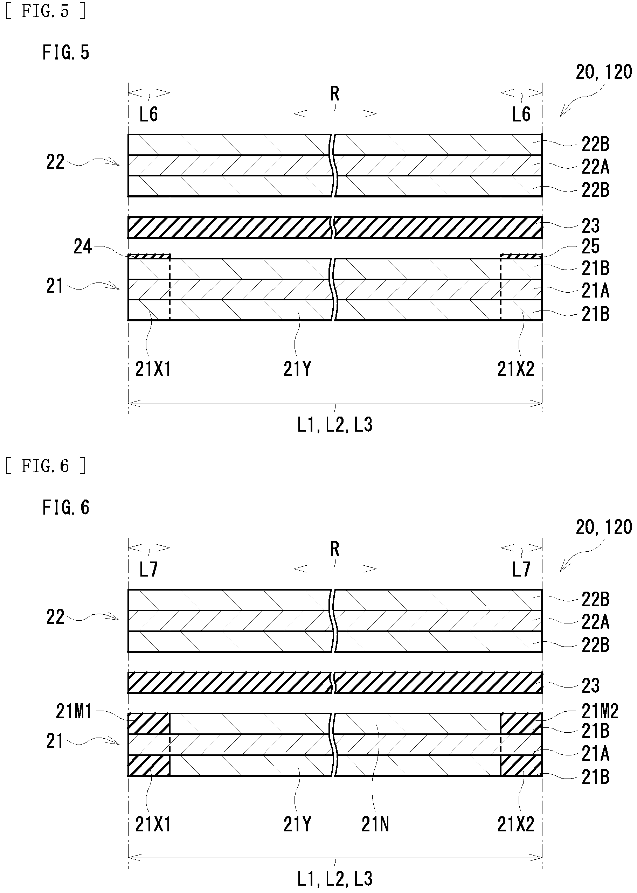

FIG. 5 illustrates a sectional configuration of the secondary battery according to the second embodiment, and corresponds to FIG. 2. The secondary battery according to the second embodiment has a configuration similar to that of the secondary battery according to the first embodiment, except for the following configuration. In FIG. 5, the same components as the components illustrated in FIG. 2 are denoted with the same reference signs. In the following description, where appropriate, reference will be made to the components of the secondary battery according to the first embodiment described already.

Here, an ultra-thin high-resistance layer is not provided on each of the one end part and the other end part of the positive electrode active material layer 21B. Instead, the positive electrode 21 includes insulating layers 24 and 25. In the positive electrode 21, the reaction less-active parts 21X1 and 21X2 and the reaction active part 21Y are thus provided by utilizing presence or absence of the insulating layers 24 and 25.

Specifically, the positive electrode active material layer 21B has, as a whole, a configuration similar to that of the reaction active part 21Y described in the first embodiment. More specifically, the middle part of the positive electrode active material layer 21B includes the positive electrode active material, which enables the charging and discharging reactions to proceed easily in the middle part. Further, each of the one end part and the other end part of the positive electrode active material layer 21B includes the positive electrode active material, which enables the charging and discharging reactions to proceed easily also in each of the one end part and the other end part.

The insulating layer 24 is disposed on the surface of the one end part of the positive electrode active material layer 21B on the side opposed to the negative electrode 22. In a region where the insulating layer 24 is disposed, the insulating layer 24 has a role similar to that of the high-resistance layer, which makes it difficult for the charging and discharging reactions to proceed in the one end part of the positive electrode active material layer 21B. The reaction less-active part 21X1 is thus provided as the one end part of the positive electrode active material layer 21B, by utilizing the insulating layer 24.

In particular, the insulating layer 24 is preferably disposed to extend onto the side surface of the reaction less-active part 21X1 (the one end part of the positive electrode active material layer 21B). A reason for this is that this makes it more difficult for the charging and discharging reactions to proceed.

The insulating layer 25 is disposed on the surface of the other end part of the positive electrode active material layer 21B on the side opposed to the negative electrode 22. In a region where the insulating layer 25 is disposed, the insulating layer 25 has a role similar to that of the high-resistance layer, which makes it difficult for the charging and discharging reactions to proceed in the other end part of the positive electrode active material layer 21B. The reaction less-active part 21X2 is thus provided as the other end part of the positive electrode active material layer 21B, by utilizing the insulating layer 25.

In particular, the insulating layer 25 is preferably disposed to extend onto the side surface of the reaction less-active part 21X2 (the other end part of the positive electrode active material layer 21B). A reason for this is that this makes it more difficult for the charging and discharging reactions to proceed.

In contrast, in a region where none of the insulating layers 24 and 25 is disposed, the charging and discharging reactions with the negative electrode 22 proceed easily in the positive electrode active material layer 21B. The reaction active part 21Y is thus provided as the middle part of the positive electrode active material layer 21B.

Each of the insulating layers 24 and 25 is an insulating resin tape having no ionic conductivity (permeability to ions). This insulating resin tape includes one or more of polymer materials including, without limitation, polyimide, polyethylene terephthalate (PET), and polyolefin. Note that the material included in the insulating layer 24 may be the same as or different from the material included in the insulating layer 25.

Details of a width L6 of each of the insulating layers 24 and 25 are similar to those of the width L4.

A method of manufacturing the secondary battery according to the second embodiment is similar to the method of manufacturing the secondary battery according to the first embodiment, except that each of the insulating layers 24 and 25 is formed instead of performing the cutting process.

In a case of forming each of the insulating layers 24 and 25, the insulating resin tape is sticked to the surface of the positive electrode active material layer 21B.

In the secondary battery according to the second embodiment also, the width L1 of the positive electrode 21 is the same as the width L2 of the negative electrode 22, and the insulating layers 24 and 25 are utilized to make the positive electrode 21 include the reaction less-active parts 21X1 and 21X2 and the reaction active part 21Y. Thus, for a reason similar to that for the secondary battery according to the first embodiment, it is possible to achieve both suppression of a short circuit and an increase in battery capacity.

In particular, each of the reaction less-active parts 21X1 and 21X2 and the reaction active part 21Y may include the positive electrode active material, and the insulating layers 24 and 25 may be disposed on the surface of the positive electrode active material layer 21B on the side opposed to the negative electrode 22. Thus, a simple configuration utilizing presence or absence of the insulating layers 24 and 25 allows each of the reaction less-active parts 21X1 and 21X2 and the reaction active part 21Y to be provided, even without performing the cutting process. As a result, suppression of a short circuit and an increase in battery capacity are both achieved easily and stably, which makes it possible to achieve higher effects.

Note that other action and effects related to the secondary battery according to the second embodiment are similar to those related to the secondary battery according to the first embodiment, except for action and effects related to the cutting process.

<3. Secondary Battery (Third Embodiment)>

Next, a description will be given of a secondary battery according to a third embodiment of the technology.

FIG. 6 illustrates a sectional configuration of the secondary battery according to the third embodiment, and corresponds to FIG. 2. The secondary battery according to the third embodiment has a configuration similar to that of the secondary battery according to the first embodiment, except for the following configuration. In FIG. 6, the same components as the components illustrated in FIG. 2 are denoted with the same reference signs. In the following description, where appropriate, reference will be made to the components of the secondary battery according to the first embodiment described already.

Here, the positive electrode active material layer 21B of the positive electrode 21 includes inactive material parts 21M1 and 21M2 and an active material part 21N. In the positive electrode 21, the reaction less-active parts 21X1 and 21X2 and the reaction active part 21Y are thus provided by utilizing the inactive material parts 21M1 and 21M2 and the active material part 21N.

Specifically, each of the one end part and the other end part of the positive electrode active material layer 21B has not been subjected to the cutting process. Instead, the positive electrode active material layer 21B includes the inactive material parts 21M1 and 21M2 into which lithium is not insertable and from which lithium is not extractable, and the active material part 21N into which lithium is insertable and from which lithium is extractable. Thus, in the positive electrode 21, the reaction less-active parts 21X1 and 21X2 are provided by the inactive material parts 21M1 and 21M2, and the reaction active part 21Y is provided by the active material part 21N.

Each of the inactive material parts 21M1 and 21M2 includes one or more of insulating materials including, without limitation, aluminum oxide (alumina), and does not include the positive electrode active material. Note that the material included in the inactive material part 21M1 may be the same as or different from the material included in the inactive material part 21M2. Note that each of the inactive material parts 21M1 and 21M2 may further include, without limitation, a binder.

Each of the inactive material parts 21M1 and 21M2 thus does not include the positive electrode active material, which prevents lithium from being inserted thereinto and extracted therefrom. Accordingly, the reaction less-active part 21X1 is provided as the one end part of the positive electrode active material layer 21B (the inactive material part 21M1), and the reaction less-active part 21X2 is provided as the other end part (the inactive material part 21M2) of the positive electrode active material layer 21B.

The active material part 21N includes the positive electrode active material. The active material part 21N has a configuration similar to that of the positive electrode active material layer 21B not subjected to the cutting process.

The active material part 21N thus includes the positive electrode active material, which allows lithium to be inserted thereinto and extracted therefrom. Accordingly, the reaction active part 21Y is provided as the middle part (the active material part 21N) of the positive electrode active material layer 21B.

Details of a width L7 of each of the inactive material parts 21M1 and 21M2 are similar to those of the width L4.

A method of manufacturing the secondary battery according to the third embodiment is similar to the method of manufacturing the secondary battery according to the first embodiment, except that, instead of performing the cutting process, the positive electrode active material layer 21B including the inactive material parts 21M1 and 21M2 and the active material part 21N is formed.

In a case of forming the positive electrode active material layer 21B, first, the insulating material is mixed with materials including, without limitation, the binder on an as-needed basis, following which the resulting mixture is put into a solvent such as an organic solvent to thereby prepare a paste insulating slurry. Thereafter, the paste positive electrode mixture slurry is applied on a portion of a surface of the positive electrode current collector 21A by the procedure described above to thereby form the active material part 21N. Lastly, the paste insulating slurry is applied on the rest of the surface of the positive electrode current collector 21A to thereby form each of the inactive material parts 21M1 and 21M2.

In the secondary battery according to the third embodiment also, the width L1 of the positive electrode 21 is the same as the width L2 of the negative electrode 22, and the inactive material parts 21M1 and 21M2 and the active material part 21N are utilized to make the positive electrode 21 include the reaction less-active parts 21X1 and 21X2 and the reaction active part 21Y. Thus, for a reason similar to that for the secondary battery according to the first embodiment, it is possible to achieve both suppression of a short circuit and an increase in battery capacity.

In particular, the active material part 21N may include the positive electrode active material, and each of the inactive material parts 21M1 and 21M2 may include the insulating material without including the positive electrode active material. Thus, a simple configuration utilizing presence or absence of the positive electrode active material allows each of the reaction less-active parts 21X1 and 21X2 and the reaction active part 21Y to be provided, even without performing the cutting process. As a result, suppression of a short circuit and an increase in battery capacity are both achieved easily and stably, which makes it possible to achieve higher effects.

Note that other action and effects related to the secondary battery according to the third embodiment are similar to those related to the secondary battery according to the first embodiment, except for action and effects related to the cutting process.

<4. Modifications>

Next, a description will be given of modifications of the secondary battery described above. The configuration of the secondary battery is appropriately modifiable as described below. Note that any two or more of the following series of modifications may be combined.

[Modification 1]

In the first embodiment (FIG. 2), the positive electrode 21 includes both of the reaction less-active parts 21X1 and 21X2 formed by means of the cutting process.

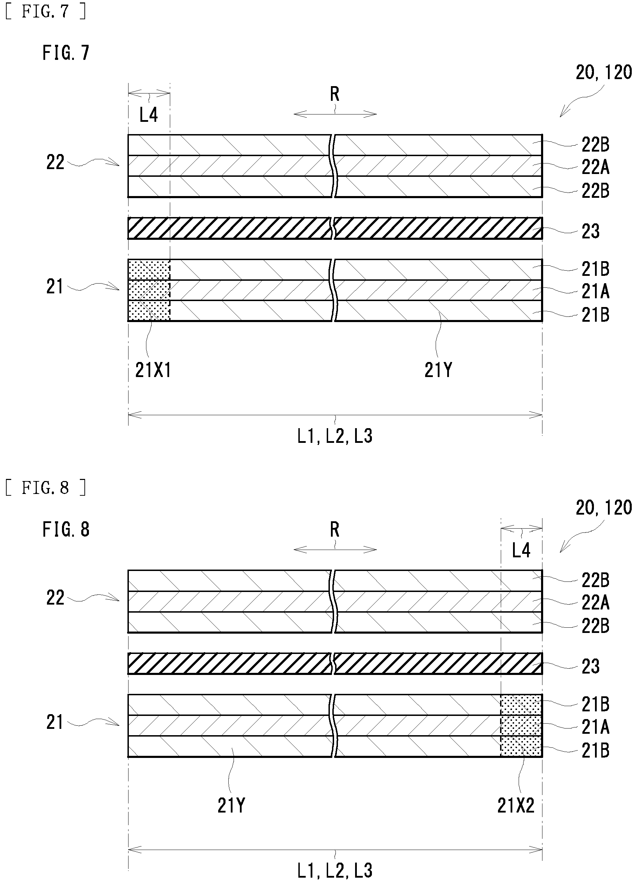

However, as illustrated in FIG. 7 corresponding to FIG. 2, the positive electrode 21 may include only the reaction less-active part 21X1 without including the reaction less-active part 21X2. Alternatively, as illustrated in FIG. 8 corresponding to FIG. 2, the positive electrode 21 may include the reaction less-active part 21X2 without including the reaction less-active part 21X1.

A method of manufacturing the secondary battery illustrated in FIG. 7 is similar to the method of manufacturing the secondary battery illustrated in FIG. 2, except that, in the process of fabricating the positive electrode 21, the cutting process is performed on only the one end part of the positive electrode active material layer 21B, without performing the cutting process on the other end part of the positive electrode active material layer 21B. A method of manufacturing the secondary battery illustrated in FIG. 8 is similar to the method of manufacturing the secondary battery illustrated in FIG. 2, except that, in the process of fabricating the positive electrode 21, the cutting process is performed on only the other end part of the positive electrode active material layer 21B, without performing the cutting process on the one end part of the positive electrode active material layer 21B.

In these cases also, suppression of a short circuit and an increase in battery capacity are both achieved by utilizing either one of the reaction less-active parts 21X1 and 21X2, which makes it possible to achieve similar effects. Note that, in order to sufficiently suppress occurrence of a short circuit and to sufficiently increase a battery capacity, the positive electrode 21 preferably includes both of the reaction less-active parts 21X1 and 21X2, as illustrated in FIG. 2.

[Modification 2]

In the second embodiment (FIG. 5), the positive electrode 21 includes both of the insulating layers 24 and 25, and therefore includes both of the reaction less-active parts 21X1 and 21X2.

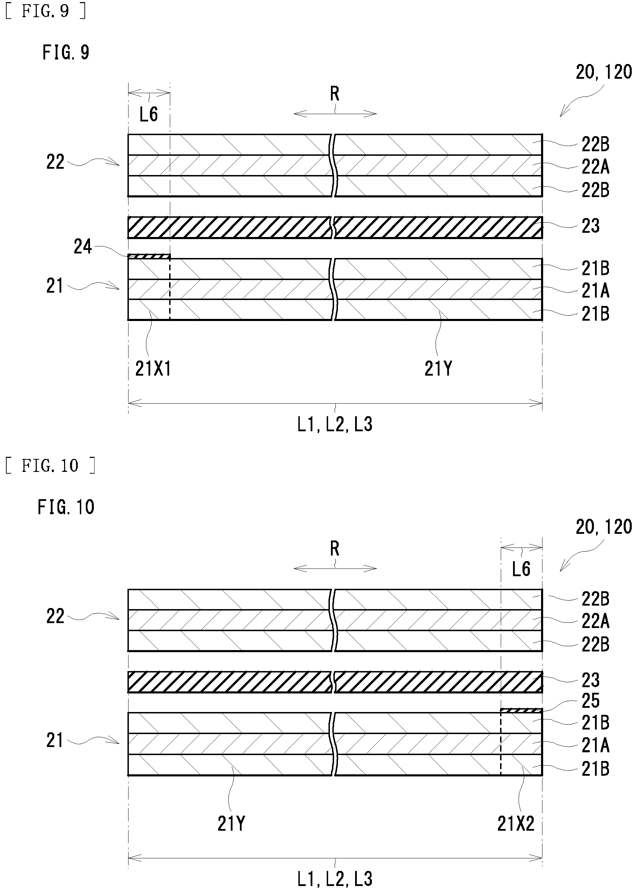

However, as illustrated in FIG. 9 corresponding to FIG. 5, the positive electrode 21 may include only the insulating layer 24 without including the insulating layer 25, and therefore may include only the reaction less-active part 21X1 without including the reaction less-active part 21X2. Alternatively, as illustrated in FIG. 10 corresponding to FIG. 5, the positive electrode 21 may include only the insulating layer 25 without including the insulating layer 24, and therefore may include only the reaction less-active part 21X2 without including the reaction less-active part 21X1.

A method of manufacturing the secondary battery illustrated in FIG. 9 is similar to the method of manufacturing the secondary battery illustrated in FIG. 2, except that only the insulating layer 24 is formed, without forming the insulating layer 25, in the process of fabricating the positive electrode 21. A method of manufacturing the secondary battery illustrated in FIG. 8 is similar to the method of manufacturing the secondary battery illustrated in FIG. 2, except that only the insulating layer 25 is formed, without forming the insulating layer 24, in the process of fabricating the positive electrode 21.

In these cases also, suppression of a short circuit and an increase in battery capacity are both achieved by utilizing either one of the reaction less-active parts 21X1 and 21X2, which makes it possible to achieve similar effects. Note that, in order to sufficiently suppress occurrence of a short circuit and to sufficiently increase a battery capacity, the positive electrode 21 preferably includes both of the insulating layers 24 and 25, as illustrated in FIG. 2.

[Modification 3]

In the third embodiment (FIG. 6), the positive electrode 21 includes both of the inactive material parts 21M1 and 21M2, and therefore includes both of the reaction less-active parts 21X1 and 21X2.

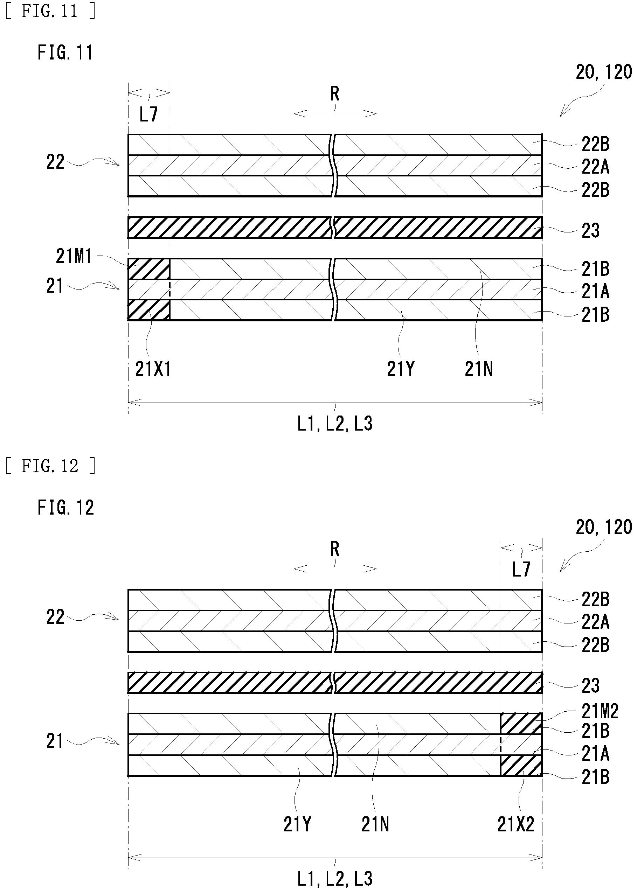

However, as illustrated in FIG. 11 corresponding to FIG. 6, the positive electrode 21 may include only the inactive material part 21M1 without including the inactive material part 21M2, and therefore may include only the reaction less-active part 21X1 without including the reaction less-active part 21X2. Alternatively, as illustrated in FIG. 12 corresponding to FIG. 6, the positive electrode 21 may include only the inactive material part 21M2 without including the inactive material part 21M1, and therefore may include only the reaction less-active part 21X2 without including the reaction less-active part 21X1.

A method of manufacturing the secondary battery illustrated in FIG. 11 is similar to the method of manufacturing the secondary battery illustrated in FIG. 2, except that only the inactive material part 21M1 is formed, without forming the inactive material part 21M2, in the process of fabricating the positive electrode 21. A method of manufacturing the secondary battery illustrated in FIG. 12 is similar to the method of manufacturing the secondary battery illustrated in FIG. 2, except that only the inactive material part 21M2 is formed, without forming the inactive material part 21M1, in the process of fabricating the positive electrode 21.

In these cases also, suppression of a short circuit and an increase in battery capacity are both achieved by utilizing either one of the reaction less-active parts 21X1 and 21X2, which makes it possible to achieve similar effects. Note that, in order to sufficiently suppress occurrence of a short circuit and to sufficiently increase a battery capacity, the positive electrode 21 preferably includes both of the inactive material parts 21M1 and 21M2, as illustrated in FIG. 2.

[Modification 4]

In each of the first embodiment, the second embodiment, and the third embodiment (FIG. 1), the secondary battery includes, inside the battery can 10, the battery device 20 which is a stacked electrode body including the positive electrode 21 and the negative electrode 22 that are stacked with the separator 23 interposed therebetween.

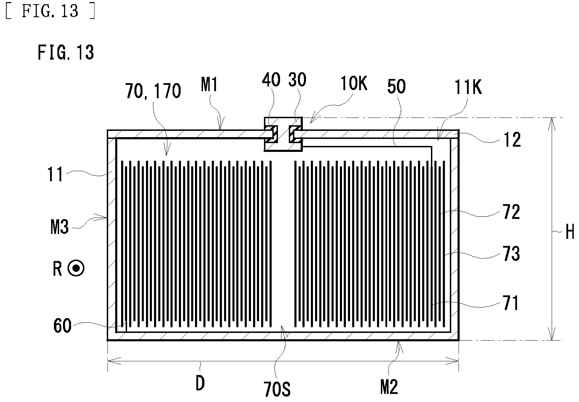

However, as illustrated in FIG. 13 corresponding to FIG. 1, the secondary battery may include, inside the battery can 10, a battery device 70 (a positive electrode 71, a negative electrode 72, and a separator 73) which is a wound electrode body, in place of the battery device 20 (the positive electrode 21, the negative electrode 22, and the separator 23) which is a stacked electrode body. In the battery device 70, the positive electrode 71 and the negative electrode 72 are wound with the separator 73 interposed therebetween. More specifically, in the battery device 70 which is a wound electrode body, the positive electrode 71 and the negative electrode 72 are stacked with the separator 73 interposed therebetween, and are wound in the state where the positive electrode 71 and the negative electrode 72 are alternately stacked with the separator 73 interposed therebetween. The battery device 70 has, at the winding core, a space (a winding center space 70S) in which none of the positive electrode 71, the negative electrode 72, and the separator 73 is present. The positive electrode 71, the negative electrode 72, and the separator 73 have configurations similar to those of the positive electrode 21, the negative electrode 22, and the separator 23, respectively. Note that, as illustrated in FIG. 13, the width direction R in a case where the battery device 70 which is a wound electrode body is used is a direction intersecting the sheet of FIG. 13.

A method of manufacturing the secondary battery illustrated in FIG. 13 is similar to the method of manufacturing the secondary battery illustrated in FIG. 1 except that, after the positive electrode 71 and the negative electrode 72 are alternately stacked with the separator 73 interposed therebetween, the stack of the positive electrode 71, the negative electrode 72, and the separator 73 is wound to thereby fabricate a wound body 170 to be used to fabricate the battery device 70. In this case, the wound body 170 is enclosed inside the battery can 10 (the containing part 11 and the cover part 12), and thereafter the wound body 170 is impregnated with an electrolytic solution injected into the battery can 10. The battery device 70 is thereby fabricated.

In this case also, suppression of a short circuit and an increase in battery capacity are both achieved by means of the reaction less-active parts 21X1 and 21X2 and the reaction active part 21Y, which makes it possible to achieve similar effects. Note that, as described above, in order to avoid a decrease in energy density per unit volume due to the occurrence of a dead space (the winding center space 70S), the battery device 20 which is a stacked electrode body causing no dead space is preferable to the battery device 70 which is a wound electrode body causing the dead space.

[Modification 5]

In the first embodiment, in order to form the high-resistance layer, the cutting process is performed by utilizing laser cutting which is a process that heats an object at high temperature. However, the method of forming the high-resistance layer may be another method other than laser cutting. Examples of the other method include a method of forming the high-resistance layer by punching the positive electrode current collector 21A with the positive electrode active material layer 21B formed thereon by means of a punching process, and thereafter locally heating the positive electrode active material layer 21B by means of a laser irradiation process (a non-cutting process).

In this case also, each of the reaction less-active parts 21X1 and 21X2 is formed by utilizing the high-resistance layer, which makes it possible to achieve similar effects.

[Examples]

Examples of the technology are described below.

<Examples 1 to 5 and Comparative Example 1>

Secondary batteries were fabricated, following which performance of the secondary batteries was evaluated.

[Fabrication of Secondary Batteries of Examples 1 to 5]

The button-type secondary batteries (lithium-ion secondary batteries) illustrated in FIGs. 1 and 2 were fabricated by a procedure described below.

(Fabrication of Positive Electrode)

First, 91 parts by mass of the positive electrode active material (LiCoO$_2$), 3 parts by mass of the positive electrode binder (polyvinylidene difluoride), and 6 parts by mass of the positive electrode conductor (graphite) were mixed with each other to thereby obtain a positive electrode mixture. Thereafter, the positive electrode mixture was put into a solvent (N-methyl-2-pyrrolidone which is an organic solvent), following which the organic solvent was stirred to thereby prepare a paste positive electrode mixture slurry. Thereafter, the positive electrode mixture slurry was applied on each of both sides of the positive electrode current collector 21A (an aluminum foil having a thickness of 12 $\mu$m) by means of a coating apparatus, following which the applied positive electrode mixture slurry was dried to thereby form the positive electrode active material layer 21B. Thereafter, the positive electrode active material layer 21B was compression-molded by means of a roll pressing machine.

Lastly, the positive electrode current collector 21A with the positive electrode active material layer 21B formed thereon was cut (laser cutting) by means of a laser apparatus whose light source was a YAG laser (having a wavelength of 1064 nm). By the cutting process, the reaction less-active parts 21X1 and 21X2 were formed, by utilizing high-temperature heating, in the vicinity (the one end part and the other end part) of the cut portion in the positive electrode active material layer 21B. In addition, the reaction active part 21Y was formed in the rest of the positive electrode active material layer 21B. In this case, the width L4 ($\mu$m) of each of the reaction less-active parts 21X1 and 21X2 was changed by changing the cutting conditions (the heating temperature and the heating time). The positive electrode 21 (having the width L1 of 16.5 mm) was thereby fabricated.

After the fabrication of the positive electrode 21, the positive electrode active material layer 21B (LiCoO$_2$) was analyzed by the microscopic Raman spectroscopy to thereby obtain a Raman spectrum. Thereafter, an analysis result to be used to determine the width L4 was obtained on the basis of the Raman spectrum. In the analysis result, the vertical axis represents the average value of the A1g half-width (cm$^{-1}$) and the horizontal axis represents the distance ($\mu$m). Examination of the width L4 ($\mu$m) based on the analysis result revealed the results described in Table 1. Note that a detailed procedure of determining the width L4 is as described above.

(Fabrication of Negative Electrode)

First, 95 parts by mass of the negative electrode active material (graphite) and 5 parts by mass of the negative electrode binder (polyvinylidene difluoride) were mixed with each other to thereby obtain a negative electrode mixture. Thereafter, the negative electrode mixture was put into a solvent (N-methyl-2-pyrrolidone which is an organic solvent), following which the organic solvent was stirred to thereby prepare a paste negative electrode mixture slurry. Thereafter, the negative electrode mixture slurry was applied on each of both sides of the negative electrode current collector 22A (a copper foil having a thickness of 15 $\mu$m) by means of a coating apparatus, following which the applied negative electrode mixture slurry was dried to thereby form the negative electrode active material layer 22B. Lastly, the negative electrode active material layer 22B was compression-molded by means of a roll pressing machine. The negative electrode 22 (having the width L2 of 16.5 mm) was thereby fabricated.

(Preparation of Electrolytic Solution)

The electrolyte salt (LiPF$_6$) was added to a solvent (ethylene carbonate and diethyl carbonate which are organic solvents), following which the solvent was stirred. In this case, a mixture ratio (a weight ratio) between ethylene carbonate and diethyl carbonate in the solvent was set to 30:70, and the content of the electrolyte salt with respect to the solvent was set to 1 mol/kg. The electrolytic solution was thereby prepared.

(Assembly of Secondary Battery)

First, the positive electrode lead 50 (an aluminum wire) was welded to the positive electrode 21 (the positive electrode current collector 21A) and the negative electrode lead 60 (an aluminum wire) was welded to the negative electrode 22 (the negative electrode current collector 22A) by the resistance welding method.

Thereafter, the positive electrode 21 with the positive electrode lead 50 coupled thereto and the negative electrode 22 with the negative electrode lead 60 coupled thereto were alternately stacked with the separator 23 (a polyethylene film having a thickness of 10 $\mu$m and the width L3 of 16.5 mm) interposed therebetween to thereby fabricate the stacked body 120.

Thereafter, the stacked body 120 was placed into the containing part 11 (SUS316) through the opening 11K. In this case, the negative electrode lead 60 was welded to the containing part 11 (the bottom part M2) by the resistance welding method.

Thereafter, the electrolytic solution was injected into the containing part 11 through the opening 11K, following which the cover part 12 (SUS316) was welded to the containing part 11 by the laser welding method. The cover part 12 has the electrode terminal 30 (an aluminum plate) attached thereto with the gasket 40 (a polypropylene film) interposed therebetween. In this case, the positive electrode lead 50 was welded to the electrode terminal 30 by the resistance welding method.

Thus, the stacked body 120 (the positive electrode 21, the negative electrode 22, and the separator 23) was impregnated with the electrolytic solution to thereby fabricate the battery device 20. In addition, the cover part 12 was joined to the containing part 11 to thereby form the battery can 10. The battery device 20, for example, was thus sealed into the battery can 10. As a result, the secondary battery was assembled.

(Stabilization of Secondary Battery)

The secondary battery having been assembled was charged and discharged for one cycle in an ambient temperature environment (at a temperature of 23°C). Upon the charging, the secondary battery was charged with a constant current of 0.1 C until a voltage reached 4.2 V, and was thereafter charged with a constant voltage of 4.2 V until a current reached 0.05 C. Upon the discharging, the secondary battery was discharged with a constant current of 0.1 C until the voltage reached 3.0 V. 0.1 C is a value of a current that causes a battery capacity (a theoretical capacity) to be completely discharged in 10 hours, and 0.05 C is a value of a current that causes a battery capacity to be completely discharged in 20 hours.

Thus, a film was formed on a surface of, for example, the negative electrode 22 to electrochemically stabilize the state of the secondary battery. As a result, the secondary battery was completed.

[Fabrication of Secondary Battery of Comparative Example 1]

The secondary battery was fabricated by a similar procedure, except that the positive electrode 21 was fabricated by means of a punching process without using laser cutting. In this case, the positive electrode active material layer 21B did not include the reaction less-active parts 21X1 and 21X2.

[Evaluation of Performance]

Evaluation of the performance (a battery capacity characteristic and voltage stability) of the secondary batteries revealed the results described in Table 1.

(Battery Capacity Characteristic)

The secondary battery of each of Comparative Example 1 and Examples 1 to 5 was charged and discharged in an ambient temperature environment (at a temperature of 23°C) to thereby measure a battery capacity (discharge capacity). In this case, twenty secondary batteries were tested to thereby calculate an average value of the battery capacity related to the twenty secondary batteries. Upon the charging, the secondary battery was charged with a constant current of 0.5 C until a voltage reached 4.2 V, and was thereafter charged with a constant voltage of 4.2 V until a total charging time reached 3.5 hours. Upon the discharging, the secondary battery was discharged with a constant current of 0.2 C until the voltage reached 3.0 V. 0.5 C is a value of a current that causes a battery capacity to be completely discharged in 2 hours, and 0.2 C is a value of a current that causes a battery capacity to be completely discharged in 5 hours.

Lastly, a capacity decrease rate which is an index for evaluating the battery capacity characteristic was calculated on the basis of the following calculation formula.

$$\text{Capacity decrease rate (\%)} = [(\text{battery capacity of secondary battery of Comparative Example 1} - \text{battery capacity of secondary battery of each of Examples 1 to 5})/\text{battery capacity of secondary battery of Comparative Example 1}] \times 100.$$

(Voltage Stability)

First, the secondary battery was charged in an ambient temperature environment (at a temperature of 23°C). A charging condition was similar to a charging condition in the process of stabilizing the secondary battery described above, except that the secondary battery was charged until a state of charge (SOC) reached 25%. Thereafter, while the secondary battery in a charged state was left to stand (for a leaving time of 72 hours) in the same environment, an open-circuit voltage (OCV) of the secondary battery was measured. Lastly, the number of secondary batteries (the number of OCV failures (number)) in which the open-circuit voltage decreased by 0.2 mV/h or greater was examined, on the basis of the measurement result of the open-circuit voltage. In this case, the total number of secondary batteries tested was 20.

[Table 1]

Table 1

|  | Width L4 ($\mu$m) | Capacity decrease rate (%) | Number of OCV failures (number) |
|---|---|---|---|
| Comparative Example 1 | 0 | 0.00 | 8 |
| Example 1 | 50 | 0.92 | 2 |
| Example 2 | 100 | 1.84 | 1 |
| Example 3 | 150 | 2.75 | 0 |
| Example 4 | 200 | 3.66 | 0 |
| Example 5 | 250 | 4.00 | 0 |

[Discussion]

As described in Table 1, the battery capacity characteristic and the voltage stability of the secondary battery varied depending on the configuration of the positive electrode 21.

Specifically, in a case where the positive electrode active material layer 21B did not include the reaction less-active parts 21X1 and 21X2 (Comparative Example 1), the capacity decrease rate was zero, which allowed a high battery capacity to be obtained. However, it became easier for a minor short circuit to occur, which caused the number of OCV failures to increase. In this case, the number of OCV failures reached about half of the total number of secondary batteries.

In contrast, in a case where the positive electrode active material layer 21B included the reaction less-active parts 21X1 and 21X2 (Examples 1 to 5), the capacity decrease rate was suppressed to a low single-digit level, which allowed the battery capacity to be secured. In addition, it became difficult for a minor short circuit to occur, which allowed the number of OCV failures to decrease. In this case, the number of OCV failures was substantially zero.

In this case, if the width L4 was from 50 $\mu$m to 150 $\mu$m both inclusive in particular, the capacity decrease rate was sufficiently suppressed, which allowed a higher battery capacity to be obtained.

[Conclusion]

The results described in Table 1 indicate that, if the positive electrode 21 had the width L1 that was the same as the width L2 of the negative electrode 22, and the positive electrode 21 included the reaction less-active parts 21X1 and 21X2 and the reaction active part 21Y, high voltage stability was obtained while the battery capacity characteristic was secured. Thus, suppression of a short circuit and an increase in battery capacity were both achieved, which allowed a superior battery characteristic to be obtained.

Although the technology has been described above with reference to some embodiments and examples, configurations of the technology are not limited to those described with reference to the embodiments and examples above, and are therefore modifiable in a variety of ways.

Specifically, while a description has been given of a case of using a liquid electrolyte (an electrolytic solution), the electrolyte is not limited to a particular kind. Thus, a gel electrolyte (an electrolyte layer) may be used, or an electrolyte in a solid form (a solid electrolyte) may be used.

Further, while a description has been given of a case where the battery device has a wound-type device structure (a wound electrode body) and a case where the battery device has a stacked-type device structure (a stacked electrode body), the device structure of the battery device is not particularly limited, and any other device structure, such as a zigzag-folded-type device structure where the electrodes (the positive electrode and the negative electrode) are folded in a zigzag shape, may be chosen.

Further, while a description has been given of a case where the electrode reactant is lithium, the electrode reactant is not particularly limited. Specifically, the electrode reactant may be, as described above, another alkali metal, such as sodium or potassium, or may be an alkaline earth metal, such as beryllium, magnesium, or calcium. Other than the above, the electrode reactant may be another light metal, such as aluminum.

The effects described herein are mere examples. Therefore, the effects of the technology are not limited to the effects described herein. Accordingly, the technology may achieve any other effect.

**Claims**

1.  A secondary battery comprising:

    a negative electrode including a negative electrode active material layer;
    a positive electrode including a positive electrode active material layer, the positive electrode active material layer having a same dimension as a dimension of the negative electrode active material layer in a width direction; and
    an electrolytic solution, wherein
    the positive electrode active material layer includes a reaction active part in which charging and discharging reactions proceed, and a reaction less-active part in which the charging and discharging reactions proceed less easily than in the reaction active part, and
    the reaction less-active part comprises one end part, another end part, or both of the positive electrode active material layer in the width direction.

2.  The secondary battery according to claim 1, wherein the reaction less-active part has a dimension that is greater than or equal to 50 micrometers and less than or equal to 150 micrometers in the width direction.

3.  The secondary battery according to claim 1, wherein

    each of the reaction active part and the reaction less-active part includes a positive electrode active material, and
    the reaction less-active part includes an insulating layer disposed on a surface on a side opposed to the negative electrode.

4.  The secondary battery according to claim 3, wherein the insulating layer is disposed to extend onto a side surface of the reaction less-active part.

5.  The secondary battery according to claim 1, wherein

    the reaction active part includes a positive electrode active material, and
    the reaction less-active part includes an insulating material.

6.  The secondary battery according to any one of claims 1 to 5, further comprising
    a separator disposed between the negative electrode and the positive electrode and having a same dimension as the dimension of the negative electrode active material layer in the width direction.

7.  The secondary battery according to any one of claims 1 to 6, further comprising

    a separator disposed between the negative electrode and the positive electrode, wherein
    the negative electrode and the positive electrode are stacked with the separator interposed therebetween.

8.  The secondary battery according to any one of claims 1 to 6, further comprising

    a separator disposed between the negative electrode and the positive electrode, wherein
    the negative electrode and the positive electrode are wound with the separator interposed therebetween.

9.  The secondary battery according to any one of claims 1 to 8, wherein the secondary battery comprises a button-type secondary battery.

**Patentansprüche**

1.  Sekundärbatterie, aufweisend:

    eine Negativelektrode, die eine Negativelektrodenaktivmaterialschicht aufweist;

eine Positivelektrode, die eine Positivelektrodenaktivmaterialschicht aufweist, wobei die Positivelektrodenaktivmaterialschicht eine gleiche Abmessung wie eine Abmessung der Negativelektrodenaktivmaterialschicht in einer Breitenrichtung aufweist; und

eine Elektrolytlösung, wobei

die Positivelektrodenaktivmaterialschicht einen reaktionsaktiven Teil, in dem Lade- und Entladevorgänge ablaufen, und einen reaktionswenigeraktiven Teil aufweist, in dem die Lade- und Entladevorgänge weniger leicht als in dem reaktionsaktiven Teil ablaufen, und

der reaktionswenigeraktive Teil ein Endteil, ein anderes Endteil oder beide der Positivelektrodenaktivmaterialschicht in der Breitenrichtung aufweist.

2.  Sekundärbatterie nach Anspruch 1, wobei der reaktionswenigeraktive Teil eine Abmessung aufweist, die größer oder gleich 50 Mikrometer und kleiner oder gleich 150 Mikrometer in der Breitenrichtung ist.

3.  Sekundärbatterie nach Anspruch 1, wobei

sowohl der Reaktionsaktivteil als auch der reaktionswenigeraktive Teil ein Positivelektrodenaktivmaterial aufweisen, und

der reaktionswenigeraktive Teil eine Isolationsschicht aufweist, die auf einer Oberfläche auf einer Seite angeordnet ist, die der Negativelektrode gegenüberliegt.

4.  Sekundärbatterie nach Anspruch 3, wobei die Isolationsschicht so angeordnet ist, dass sie sich auf eine Seitenfläche des reaktionswenigeraktiven Teils erstreckt.

5.  Sekundärbatterie nach Anspruch 1, wobei

der Reaktionsaktivteil ein Positivelektrodenaktivmaterial aufweist, und

der reaktionswenigeraktive Teil ein Isoliermaterial aufweist.

6.  Sekundärbatterie nach einem der Ansprüche 1 bis 5, des Weiteren aufweisend

einen Separator, der zwischen der Negativelektrode und der Positivelektrode angeordnet ist und eine gleiche Abmessung wie die Abmessung der Negativelektrodenaktivmaterialschicht in der Breitenrichtung aufweist.

7.  Sekundärbatterie nach einem der Ansprüche 1 bis 6, des Weiteren aufweisend

einen Separator, der zwischen der Negativelektrode und der Positivelektrode angeordnet ist, wobei die Negativelektrode und die Positivelektrode mit dazwischenliegendem Separator gestapelt sind.

8.  Sekundärbatterie nach einem der Ansprüche 1 bis 6, des Weiteren aufweisend

einen Separator, der zwischen der Negativelektrode und der Positivelektrode angeordnet ist, wobei die Negativelektrode und die Positivelektrode mit dazwischenliegendem Separator gewickelt sind.

9.  Sekundärbatterie nach einem der Ansprüche 1 bis 8, wobei die Sekundärbatterie eine Knopfzellen-Sekundärbatterie aufweist.

**Revendications**

1.  Batterie secondaire, comprenant :

une électrode négative comportant une couche de matériau actif d'électrode négative ;

une électrode positive comportant une couche de matériau actif d'électrode positive, la couche de matériau actif d'électrode positive ayant une même dimension que la couche de matériau actif d'électrode négative dans la direction de la largeur ; et

une solution électrolytique, dans laquelle

la couche de matériau actif de l'électrode positive comporte une partie active de réaction dans laquelle des réactions de charge et de décharge se produisent, et une partie moins active de réaction dans laquelle les réactions de charge et de décharge se produisent moins facilement que dans la partie active de réaction, et

la partie moins active de réaction comprend une partie d'extrémité, une autre partie d'extrémité ou les deux de la couche de matériau actif de l'électrode positive dans la direction de la largeur.

2. Batterie secondaire selon la revendication 1, dans laquelle la partie moins active de réaction a une dimension supérieure ou égale à 50 micromètres et inférieure ou égale à 150 micromètres dans la direction de la largeur.

3. Batterie secondaire selon la revendication 1, dans laquelle

la partie active de réaction et la partie moins active de réaction comportent chacune un matériau actif d'électrode positive, et
la partie moins active de réaction comporte une couche isolante disposée sur une surface du côté opposé à l'électrode négative.

4. Batterie secondaire selon la revendication 3, dans laquelle la couche isolante est disposée de manière à s'étendre sur une surface latérale de la partie moins active de réaction.

5. Batterie secondaire selon la revendication 1, dans laquelle

la partie active de réaction comporte un matériau actif d'électrode positive, et
la partie moins active de réaction comporte un matériau isolant.

6. Batterie secondaire selon l'une quelconque des revendications 1 à 5, comprenant en outre
un séparateur disposé entre l'électrode négative et l'électrode positive et ayant une même dimension que la couche de matériau actif de l'électrode négative dans la direction de la largeur.

7. Batterie secondaire selon l'une quelconque des revendications 1 à 6, comprenant en outre

un séparateur disposé entre l'électrode négative et l'électrode positive, dans laquelle
l'électrode négative et l'électrode positive sont empilées, le séparateur étant interposé entre elles.

8. Batterie secondaire selon l'une quelconque des revendications 1 à 6, comprenant en outre

un séparateur disposé entre l'électrode négative et l'électrode positive, dans laquelle
l'électrode négative et l'électrode positive sont enroulées avec le séparateur interposé entre elles.

9. Batterie secondaire selon l'une quelconque des revendications 1 à 8, dans laquelle la batterie secondaire comprend une batterie secondaire de type bouton.

[ FIG. 1 ]

FIG. 1

[ FIG. 2 ]

FIG. 2

[ FIG. 3 ]

FIG. 3

20

22

22B
22A
22B

23

21

21B
21A
21B

L5

R

L5

L1

L2

L3

[ FIG. 4 ]

FIG. 4

20

22

22B
22A
22B

23

21

21B
21A
21B

R

L1, L2

L3

[ FIG. 5 ]

FIG. 5

[ FIG. 6 ]

FIG. 6

[ FIG. 7 ]

FIG. 7

20, 120

L4

R

22

22B
22A
22B

23

21

21B
21A
21B

21X1

21Y

L1, L2, L3

[ FIG. 8 ]

FIG. 8

20, 120

R

L4

22

22B
22A
22B

23

21

21B
21A
21B

21Y

21X2

L1, L2, L3

[ FIG. 9 ]

FIG. 9

20, 120

L6

R

22

22B
22A
22B

23

24

21

21B
21A
21B

21X1

21Y

L1, L2, L3

[ FIG. 10 ]

FIG. 10

20, 120

R

L6

22

22B
22A
22B

23

25
21B

21

21A
21B

21Y

21X2

L1, L2, L3

[ FIG. 11 ]

FIG. 11

[ FIG. 12 ]

FIG. 12

[ FIG. 13 ]

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11307084 A
- JP 2007510259 A
- JP H06223860 A
- JP 2018037308 A
- JP 2016219327 A
- JP 2004055537 A
- JP 2016105360 A
- JP 2017098178 A
- JP 2019079708 A